(19) Europäisches Patentamt
European Patent Office
Office européen des brevets

(11) **EP 3 925 124 B1**

(12) **EUROPEAN PATENT SPECIFICATION**

(45) Date of publication and mention
of the grant of the patent:
**02.07.2025 Bulletin 2025/27**

(21) Application number: **20706832.1**

(22) Date of filing: **06.02.2020**

(51) International Patent Classification (IPC):
*H04L 1/1829* (2023.01)     *H04L 1/1867* (2023.01)
*H04L 5/00* (2006.01)

(52) Cooperative Patent Classification (CPC):
**H04L 1/1861; H04L 1/1896; H04L 5/0044;
H04L 5/0055; H04L 5/0094**

(86) International application number:
**PCT/IB2020/050964**

(87) International publication number:
**WO 2020/165702 (20.08.2020 Gazette 2020/34)**

(54) **HARQ ACK FOR MULTI-PDCCH SCHEDULED PDSCH TRANSMISSION OVER MULTIPLE TRANSMISSION RECEPTION POINTS**

HARQ-ACK FÜR MULTI-PDCCH-GEPLANTE PDSCH-ÜBERTRAGUNG ÜBER MEHRERE SENDEEMPFANGSSTELLEN

ACK DE HARQ POUR LA TRANSMISSION DE PDSCH ORDONNANCÉE À MULTIPLES PDCCH SUR DE MULTIPLES POINTS D'ÉMISSION-RÉCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2019   US 201962806412 P**

(43) Date of publication of application:
**22.12.2021   Bulletin 2021/51**

(73) Proprietor: **Telefonaktiebolaget LM Ericsson
(publ)
164 83 Stockholm (SE)**

(72) Inventors:
• **GAO, Shiwei
Nepean, Ontario K2J OH5 (CA)**
• **FAXÉR, Sebastian
112 48 Stockholm (SE)**
• **FRENNE, Mattias
754 43 Uppsala (SE)**

• **MURUGANATHAN, Siva
Stittsville, Ontario K2S 0R3 (CA)**

(74) Representative: **Laqua, Bernd Christian Kurt
Wuesthoff & Wuesthoff
Patentanwälte und Rechtsanwalt PartG mbB
Schweigerstraße 2
81541 München (DE)**

(56) References cited:
**EP-A1- 3 883 136     WO-A1-2018/228487**

• **VIVO: "UCI enhancements for URLLC", vol. RAN
WG1, no. Taipei; 20190121 - 20190125, 20
January 2019 (2019-01-20), XP051593053,
Retrieved from the Internet <URL:http://
www.3gpp.org/ftp/Meetings%5F3GPP%5FSYNC/
RAN1/Docs/R1%2D1900127%2Ezip> [retrieved
on 20190120]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to wireless communications, and in particular, to assignment of downlink control channel candidates to monitor and implementation of feedback associated with the downlink control channel candidates.

BACKGROUND

New Radio (NR) Frame Structure and Resource Grid

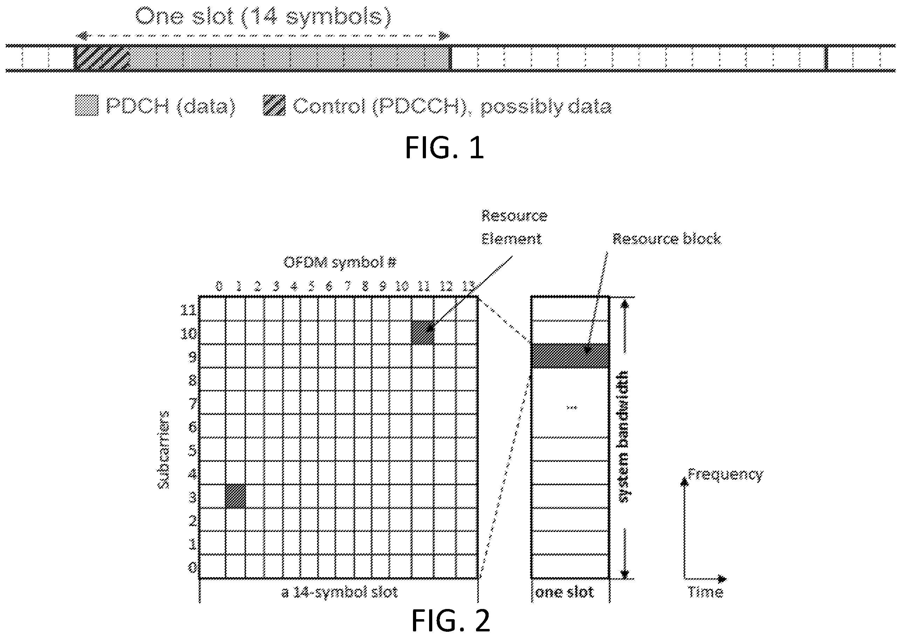

Third Generation Partnership Project (3GPP) New Radio (NR) (also known as "5G") uses CP-OFDM (Cyclic Prefix Orthogonal Frequency Division Multiplexing) in both the downlink (i.e., from a network node such as a gNB or base station, to a wireless device such as a user equipment or UE) and the uplink (i.e., from wireless device to network node). Discrete Fourier Transform (DFT) spread Orthogonal Frequency-Division Multiplexing (OFDM) is also supported in the uplink. In the time domain, NR downlink and uplink are organized into equally-sized subframes of 1ms each. A subframe is further divided into multiple slots of equal duration. The slot length depends on subcarrier spacing. For subcarrier spacing of ∆f=15kHz, there is only one slot per subframe and each slot consists of 14 OFDM symbols.
Data scheduling in NR is typically performed on a slot basis. An example is shown in FIG. 1 with a 14-symbol slot, where the first two symbols contain physical downlink control channel (PDCCH) and the rest contains physical shared data channel, either PDSCH (physical downlink shared channel) or PUSCH (physical uplink shared channel).
Different subcarrier spacing values are supported in NR. The supported subcarrier spacing values (also referred to as different numerologies) are given by $\Delta f = (15 \times 2^\mu)\ kHz$ where $\mu \in \{0,1,2,3,4\}$. $\Delta f = 15kHz$ is the basic subcarrier spacing. The slot durations at different subcarrier spacings is given by $\frac{1}{2^\mu}\ ms$.
In the frequency domain, a system bandwidth is divided into resource blocks (RBs), each corresponds to 12 contiguous subcarriers. The RBs are numbered starting with 0 from one end of the system bandwidth. The basic NR physical time-frequency resource grid is illustrated in FIG. 2, where only one resource block (RB) within a 14-symbol slot is shown. One OFDM subcarrier during one OFDM symbol interval forms one resource element (RE).
Downlink transmissions are dynamically scheduled, i.e., in each slot the network node transmits downlink control information (DCI) over PDCCH (Physical Downlink Control Channel) as to which wireless device data is to be transmitted to, and which RBs in the current downlink slot the data is transmitted on. The wireless device data are carried on PDSCH.
There are two DCI formats defined for scheduling PDSCH in NR, i.e., DCI format 1-0 and DCI format 1-1. DCI format 1-0 has a smaller size than DCI 1-1 and can be used when a wireless device is not fully connected to the network while DCI format 1-1 can be used for scheduling MIMO (Multiple-Input-Multiple-Output) transmissions with multiple MIMO layers.

QCL and TCI states

Several signals can be transmitted from the same network node antenna from different antenna ports. These signals can have the same large-scale properties, for instance in terms of Doppler shift/spread, average delay spread, or average delay. These antenna ports may be referred to as being quasi co-located (QCL).
The network node can then signal to the wireless device that two antenna ports are QCL. If the wireless device knows that two antenna ports are QCL with respect to a certain parameter (e.g., Doppler spread), the wireless device can estimate that parameter based on one of the antenna ports and use that estimate when receiving the other antenna port. Typically, the first antenna port is represented by a measurement reference signal such as CSI-RS (known as source RS) and the second antenna port is a demodulation reference signal (DMRS) (known as target RS).
For instance, if antenna ports A and B are QCL with respect to average delay, the wireless device can estimate the average delay from the signal received from antenna port A (known as the source reference signal (RS)) and assume that the signal received from antenna port B (target RS) has the same average delay. This is useful for demodulation since the wireless device can know beforehand the properties of the channel when trying to measure the channel utilizing the DMRS, which may help the wireless device in for instance selecting an appropriate channel estimation filter.
Information about what assumptions can be made regarding QCL is signaled to the wireless device from the network node. In NR, four types of QCL relations between a transmitted source RS and transmitted target RS were defined:

- **Type A:** {Doppler shift, Doppler spread, average delay, delay spread}
- **Type B:** {Doppler shift, Doppler spread}
- **Type C:** {average delay, Doppler shift}

- **Type D:** {Spatial Rx parameter}

QCL type D was introduced to facilitate beam management with analog beamforming and is known as *spatial QCL.* There is currently no strict definition of spatial QCL, but it may refer to the situation where if two transmitted antenna ports are spatially QCL, the wireless device can use the same Rx beam to receive them. Note that for beam management, the discussion may revolve around QCL Type D, but it may also be necessary to convey a Type A QCL relation for the RSs to the wireless device, so that it can estimate all the relevant large-scale parameters.

Typically, this is achieved by configuring the wireless device with a CSI-RS for tracking (TRS) for time/frequency offset estimation. To be able to use any QCL reference, the wireless device would have to receive it with a sufficiently good SINR. In many cases, this means that the TRS has to be transmitted in a suitable beam to a certain wireless device.

To introduce dynamics in beam and transmission point (TRP or transmission reception point) selection, the wireless device can be configured through RRC signalling with $N$ TCI states, where $N$ is up to 128 in frequency range 2 (FR2) and up to 8 in frequency range 1 (FR1), depending on wireless device capability.

Each TCI state contains QCL information, i.e., one or two source DL RSs, each source RS associated with a QCL type. For example, a TCI state contains a pair of reference signals, each associated with a QCL type, e.g., two different CSI-RSs {CSI-RS1, CSI-RS2} are configured in the TCI state as {qcl-Type1,qcl-Type2} = {Type A, Type D}. It means the wireless device can derive Doppler shift, Doppler spread, average delay, delay spread from CSI-RS1 and Spatial Rx parameter (i.e., the RX beam to use) from CSI-RS2.

Each of the $N$ states in the list of TCI states can be interpreted as a list of N possible beams transmitted from the network or a list of N possible TRPs used by the network node to communicate with the wireless device.

A first list of available TCI states is configured for PDSCH, and a second list for PDCCH contains pointers, known as TCI State IDs, to a subset of the TCI states configured for PDSCH. The network node then activates one TCI state for PDCCH (i.e., provides a TCI for PDCCH) and up to eight active TCI states for PDSCH. The number of active TCI states the wireless device supports is based on the wireless device capability, but the maximum is 8.

Each configured TCI state contains parameters for the quasi co-location associations between source reference signals (CSI-RS or SSB) and target reference signals (e.g., PDSCH/PDCCH DMRS ports). TCI states are also used to convey QCL information for the reception of CSI-RS.

CORESET and Search Space

A UE monitors a set of PDCCH candidates in one or more Control Resource Sets (CORESETs) on an active DL bandwidth part (BWP) on each activated serving cell configured with PDCCH monitoring according to corresponding search space sets where monitoring implies decoding each PDCCH candidate according to the monitored DCI formats. A PDCCH candidate includes one or more control-channel elements (CCEs) as indicated in Table 1 below. A CCE consists of 6 resource-element groups (REGs) where a REG equals one RB during one OFDM symbol.

Table 1:NR supported PDCCH aggregation levels.

| Aggregation level | Number of CCEs |
|---|---|
| 1 | 1 |
| 2 | 2 |
| 4 | 4 |
| 8 | 8 |
| 16 | 16 |

A set of PDCCH candidates for a wireless device to monitor is defined in terms of PDCCH search space sets. A search space set can be a Common Search Space (CSS) set or a wireless device Specific Search Space (USS) set. A wireless device can be configured with up to 10 sets of search spaces for monitoring PDCCH candidates. A search space set is defined over a Control Resource Set (CORESET). A CORESET consists of $N_{\mathrm{RB}}^{\mathrm{CORESET}}$ resource blocks in the frequency domain and $N_{\mathrm{symb}}^{\mathrm{CORESET}} \in \{1,2,3\}$ consecutive OFDM symbols in the time domain. A wireless device can be configured with up to 5 CORESETs. For each CORESET, a wireless device may be configured by RRC (Radio Resource Control) signaling with CORESET information element (IE), which may include the following:

- a CORESET index $p$, $0 \le p < 15$;
- a DM-RS scrambling sequence initialization value;
- a precoder granularity for a number of REGs in the frequency domain where the wireless device can assume use of a same DM-RS (DeModulation Reference Signal) precoder;
- a number of consecutive symbols;
- a set of resource blocks;
- CCE-to-REG mapping parameters;
- a list of up to 64 TCI-States can be configured in a CORESET $p$. These TCI states are used to provide QCL relationships between the source DL RS(s) in one RS Set in the TCI State and the PDCCH DMRS ports (i.e., for DMRS ports for PDCCHs received in one of the search spaces defined over CORESET $p$). The source DL RS(s) can either be a CSI-RS or SSB;
- an indication for a presence or absence of a transmission configuration indication (TCI) field for DCI format 1_1 transmitted by a PDCCH in CORESET $p$.

For each search space set, a wireless device may be configured with the following:

- a search space set index $s$, $0 \le s < 40$;
- an association between the search space set s and a CORESET $p$;
- a PDCCH monitoring periodicity of $k_s$ slots and a PDCCH monitoring offset of $o_s$ slots;
- a PDCCH monitoring pattern within a slot, indicating first symbol(s) of the CORESET within a slot for PDCCH monitoring;
- a duration of $T_s < k_s$ slots indicating a number of slots that the search space set $s$ exists;
- a number of PDCCH candidates $M_s^{(L)}$ per CCE aggregation level $L$;
- an indication that search space set s is either a CSS set or a USS set; and/or
- DCI formats to monitoring;

For search space set $s$, the wireless device determines that a PDCCH monitoring occasion(s) exists in a slot with slot number $n_{s,f}^{\mu}$ in a frame with frame number $n_f$ if $\left(n_f \cdot N_{\text{slot}}^{\text{frame},\mu} + n_{s,f}^{\mu} - o_s\right) \bmod k_s = 0$. The wireless device monitors PDCCH for search space set s for $T_s$ consecutive slots, starting from slot $n_{s,f}^{\mu}$, and does not monitor PDCCH for search space set s for the next $k_s - T_s$ consecutive slots.

A wireless device first detects and decodes PDCCH and if the decoding is successful, it then decodes the corresponding PDSCH based on the decoded control information in the PDCCH. When a PDSCH is successfully decoded, the HARQ (Hybrid ARQ) ACK is sent to the network node over PUCCH (Physical Uplink Control Channel). Otherwise, a HARQ NACK is sent to the network node over PUCCH so that data can be retransmitted to the wireless device. In particular, in one or more examples, the general procedure for receiving downlink transmission may include that the wireless device first monitors and decodes a PDDCH in slot n which points to a DL data in PDSCH scheduled in slot n+K0 slots (K0 is larger than or equal to 0). The wireless device then decodes the data in the corresponding PDSCH. Based on the outcome of the decoding, the wireless device sends an acknowledgement of the correct decoding (ACK) or negative acknowledgement (NACK)) for failed/incorrect decoding to the network node at time slot n+K1. Both of K0 and K1 may be indicated in the downlink DCI.

Uplink data transmissions are also dynamically scheduled using PDCCH. Similar to downlink, a wireless device first decodes uplink grants in PDCCH and then transmits data over PUSCH based the decoded control information in the uplink grant such as modulation order, coding rate, uplink resource allocation, and etc.

Spatial Multiplexing

Multi-antenna techniques can significantly increase the data rates and reliability of a wireless communication system. The performance can be improved if both the transmitter and the receiver are equipped with multiple antennas, which results in a multiple-input multiple-output (MIMO) communication channel. Such systems and/or related techniques are commonly referred to as MIMO.

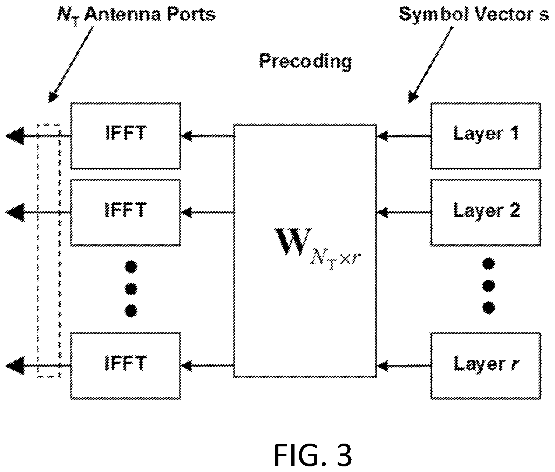

A component in NR is the support of MIMO antenna deployments and MIMO related techniques. Spatial multiplexing is one of the MIMO techniques used to achieve high data rates in favorable channel conditions. An illustration of the spatial multiplexing operation is provided in FIG. 3, as an example.

The information carrying symbol vector $\boldsymbol{s} = [s_1, s_2, \dots, s_r]^T$ is multiplied by an $N_T$ x $r$ precoder matrix $\boldsymbol{W}$, which serves to distribute the transmit energy in a subspace of the $N_T$ (corresponding to $N_T$ antenna ports) dimensional vector space. The precoder matrix is typically selected from a codebook of possible precoder matrices, and typically indicated by means of a precoder matrix indicator (PMI), which specifies a unique precoder matrix in the codebook for a given number of symbol streams. The $r$ symbols in s each correspond to a MIMO layer and $r$ is referred to as the transmission rank. In this way, spatial multiplexing is achieved since multiple symbols can be transmitted simultaneously over the same time and frequency resource element (RE). The number of symbols $r$ is typically adapted to suit the current channel properties.

The received signal at a wireless device with $N_R$ receive antennas at a certain RE $n$ is given by

$$ y_n = H_n Ws + e_n $$

where $\boldsymbol{y}_n$ is a $N_R \times 1$ received signal vector, $\boldsymbol{H}_n$ a $N_R \times N_T$ channel matrix at the RE, $\boldsymbol{e}_n$ is a $N_R \times 1$ noise and interference vector received at the RE by the wireless device. The precoder $\boldsymbol{W}$ can be a wideband precoder, which is constant over frequency, or frequency selective, i.e. different over ferequency.

The precoder matrix is often chosen to match the characteristics of the $N_R$ x $N_T$ MIMO channel matrix $\boldsymbol{H}_n$, resulting in so-called channel dependent precoding. This is also commonly referred to as closed-loop precoding and essentially strives for focusing the transmit energy into a subspace which is strong in the sense of conveying much of the transmitted energy to the wireless device. In addition, the precoder matrix may also be selected to strive for orthogonalizing the channel, meaning that after proper linear equalization at the wireless device, the inter-layer interference is reduced.

The transmission rank, and thus the number of spatially multiplexed layers, is reflected in the number of columns of the precoder. The transmission rank is also dependent on the Signal to noise plus interference ratio (SINR) observed at the wireless device. Typically, a higher SINR is required for transmissions with higher ranks. For efficient performance, it may be important that a transmission rank that matches the channel properties as well as the interference is selected. The precoding matrix, the transmission rank, and the channel quality are part of channel state information (CSI), which is typically measured by a wireless device and fed back to a network node, e.g., gNB.

NR MIMO Data Transmission

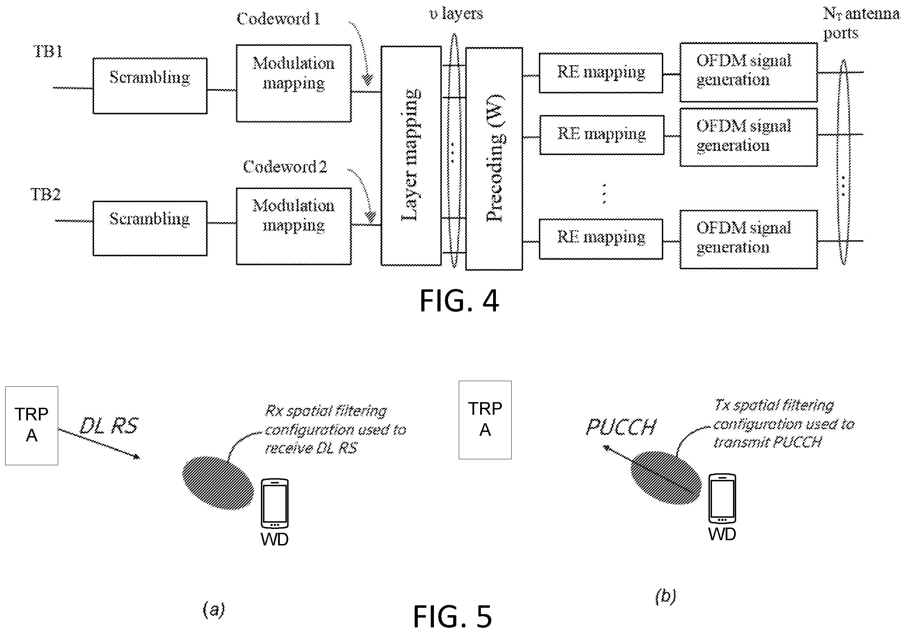

An example of NR data transmission over multiple MIMO layers is shown in FIG. 4. Depending on the total number of MIMO layers or the rank, either one code word (CW) or two codewords is used. In NR Release-15, one code word is used when the total number of layers is equal to or less than 4, two codewords are used when the number of layers is more than 4. Each codeword contains the encoded data bits of a transport block (TB). After bit level scrambling, the scrambled bits are mapped to complex-valued modulation symbols $d^{(q)}(0), \dots, d^{(q)}(M_{\text{symb}}^{(q)} - 1)$ for codeword $q$.

The complex-valued modulation symbols are then mapped onto the layers $x(i) = [x^{(0)}(i) \dots x^{(v-1)}(i)]^T$, $i = 0,1,\dots,M_{\text{symb}}^{\text{layer}} - 1$, according to Table 7.3.1.3-1 of Third Generation Partnership Project (3GPP) Technical Specification (TS) 38.211 v15.4.0.

For demodulation purposes, a demodulation reference signal (DMRS), also referred to as a DMRS port is transmitted along each data layer. The block of vectors $[x^{(0)}(i) \dots x^{(v-1)}(i)]^T$, $i = 0,1,\dots,M_{\text{symb}}^{\text{layer}} - 1$ shall be mapped to DMRS antenna ports according to

$$ \begin{bmatrix} y^{(p_0)}(i) \\ \vdots \\ y^{(p_{v-1})}(i) \end{bmatrix} = \begin{bmatrix} x^{(0)}(i) \\ \vdots \\ x^{(v-1)}(i) \end{bmatrix} $$

where $i = 0,1,\dots,M_{\text{symb}}^{\text{ap}} - 1, M_{\text{symb}}^{\text{ap}} = M_{\text{symb}}^{\text{layer}}$. The set of DMRS antenna ports $\{p_{0,\dots,}p_{v-1}\}$ and port to layer mapping are dynamically indicated in DCI according to Tables 7.3.1.2.2-1/2/3/4 in 3GPP TS 38.212 v15.4.0.

NR HARQ ACK/NACK feedback over PUCCH

When receiving a PDSCH in the downlink from a serving network node at slot *n,* a wireless device feeds back a HARQ ACK at slot *n+k* over a PUCCH (Physical Uplink Control Channel) resource in the uplink to the network node if the PDSCH is decoded successfully, otherwise, the wireless device sends a HARQ NACK at slot *n+k* to the network node to indicate that the PDSCH is not decoded successfully. If two TBs are carried by the PDSCH, then a HARQ ACK/NACK is reported for each TB so that if one TB is not decoded successfully, only that TB needs to be retransmitted by the network node.

For DCI format 1-0, *k* is indicated by a 3-bit PDSCH-to-HARQ-timing-indicator field. For DCI format 1-1, *k* is indicated either by a 3-bit PDSCH-to-HARQ-timing-indicator field, if present, or by higher layer through Radio Resource Control (RRC) signaling.

If code block group (CBG) transmission is configured, a HARQ ACK/NACK for each CBG in a TB is reported instead.

In case of carrier aggregation (CA) with multiple carriers and/or TDD operation, multiple aggregated HARQ ACK/NACK bits need to be sent in a single PUCCH.

In NR, up to four PUCCH resource sets can be configured to a UE. A PUCCH resource set with *pucch-ResourceSetId=0* can have up to 32 PUCCH resources while for PUCCH resource sets with *pucch-ResourceSetId=1 to 3,* each set can have up to 8 PUCCH resources. A wireless device determines the PUCCH resource set in a slot based on the number of aggregated UCI (Uplink Control Information) bits to be sent in the slot. The UCI bits consists of HARQ ACK/NACK, scheduling request (SR), and channel state information (CSI) bits.

If the wireless device transmits $O_{UCI}$ UCI information bits, the wireless device determines a PUCCH resource set to be

- a first set of PUCCH resources with *pucch-ResourceSetId* = 0 if $O_{UCI} \leq 2$ including 1 or 2 HARQ-ACK information bits and a positive or negative SR on one SR transmission occasion if transmission of HARQ-ACK information and SR occurs simultaneously, or

- a second set of PUCCH resources with *pucch-ResourceSetId* = 1, if provided by higher layers, if $2 < O_{UCI} \leq N_2$, or

- a third set of PUCCH resources with *pucch-ResourceSetId* = 2, if provided by higher layers, if $N_2 < O_{UCI} \leq N_3$, or

- a fourth set of PUCCH resources with *pucch-ResourceSetId* = 3, if provided by higher layers, if $N_3 < O_{UCI} \leq 1706$.

where $N_1 < N_2 < N_3$ are provided by higher layers.

For a PUCCH transmission with HARQ-ACK information, a wireless device determines a PUCCH resource after determining a PUCCH resource set. The PUCCH resource determination is based on a 3-bit PUCCH resource indicator (PRI) field in DCI format 1_0 or DCI format 1_1.

If more than one DCI format 1_0 or 1_1 are received in the case of CA and/or TDD, the PUCCH resource determination is based on a *PUCCH resource indicator* (PRI) field in the last DCI format 1_0 or DCI format 1_1 among the multiple received DCI format 1_0 or DCI format 1_1 that the wireless device detects. The multiple received DCI format 1_0 or DCI format 1_1 have a value of a *PDSCH-to-HARQ_feedback timing indicator* field indicating a same slot for the PUCCH transmission. For PUCCH resource determination, detected DCI formats are first indexed in an ascending order across serving cells indexes for a same PDCCH monitoring occasion and are then indexed in an ascending order across PDCCH monitoring occasion indexes.

The 3 bits PRI field maps to a PUCCH resource in a set of PUCCH resources with a maximum of eight PUCCH resources. For the first set of PUCCH resources with *pucch-ResourceSetId* = 0 and when the number of PUCCH resources, $R_{PUCCH}$, in the set is larger than eight, the wireless device determines a PUCCH resource with index $r_{PUCCH}$, $0 \leq r_{PUCCH} \leq R_{PUCCH} - 1$, for carrying HARQ-ACK information in response to detecting a last DCI format 1_0 or DCI format 1_1 in a PDCCH reception, among DCI formats 1_0 or DCI formats 1_1 the wireless device received with a value of the PDSCH-to-HARQ_feedback timing indicator field indicating a same slot for the PUCCH transmission, as

$$
r_{\text{PUCCH}} = \begin{cases} \left\lfloor \dfrac{n_{\text{CCE},p} \cdot \left\lceil R_{\text{PUCCH}}/8 \right\rceil}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[4ex] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}
$$

where $N_{CCE,p}$ is a number of CCEs in CORESET p of the PDCCH reception for the DCI format 1_0 or DCI format 1_1 as described in Subclause 10.1 of 3GPP TS 38.213 v15.4.0, $n_{CCE,p}$ is the index of a first CCE for the PDCCH reception, and $\varDelta_{PRI}$ is a value of the PUCCH resource indicator field in the DCI format 1_0 or DCI format 1_1.

Spatial Relation Definition

While QCL refers to a relationship between two different DL RSs from a wireless device perspective, NR has also adopted the term "spatial relation" to refer to a relationship between an UL (uplink) RS (PUCCH/PUSCH DMRS) and another RS, which can be either a DL RS (CSI-RS or SSB) or an UL RS (SRS). This is also defined from a wireless device perspective.

If an UL RS is spatially related to a DL RS, it means that the wireless device may transmit the UL RS in the opposite (reciprocal) direction from which it received the DL RS previously. More precisely, the wireless device should apply the "same" Tx spatial filtering configuration for the transmission of the UL RS as the Rx spatial filtering configuration it used to receive the spatially related DL RS previously. Here, the terminology 'spatial filtering configuration" may refer to the antenna weights that are applied at either the transmitter or the receiver for data/control transmission/reception.

On the other hand, if a first UL RS is spatially related to a second UL RS, then the wireless device should apply the same Tx spatial filtering configuration for the transmission for the first UL RS as the Tx spatial filtering configuration it used to transmit the second UL RS previously.

An example of using spatial relation for PUCCH is shown in FIG. 5. First, the network node in TRP A indicates to the wireless device (WD) that the PUCCH DMRS is spatially related to the DL RS. Then, the wireless device receives the DL RS using RX spatial filtering configuration (i.e., Rx beam) shown in diagram (a) in FIG. 5. As shown in diagram (b) of FIG. 5, the wireless device uses the same TX spatial filtering configuration (i.e., Tx beam) as the one it used in (a) of FIG. 5 to transmit PUCCH.

Spatial relation indication for PUCCH

For NR, 3GPP TS 38.213 and 3GPP TS 38.331 specify that a wireless device can be RRC configured with a list of up to 8 spatial relations for PUCCH. This list is given by the RRC parameter *PUCCH_SpatialRelationInfo.* For example, the list would typically contain the IDs of a number of SSBs and/or CSI-RS resources. Alternatively, the list may also contain the IDs of a number of SRS resources.

Based on the DL(UL) beam management measurements performed by the wireless device (network node), the network node selects one of the RS IDs from the list of configured ones in *PUCCH_SpatialRelationInfo.* The selected spatial relation is then activated via a MAC-CE message signaled to the wireless device for a given PUCCH resource. The wireless device then uses the signaled spatial relation for the purposes of adjusting the Tx spatial filtering configuration for the transmission on that PUCCH resource.

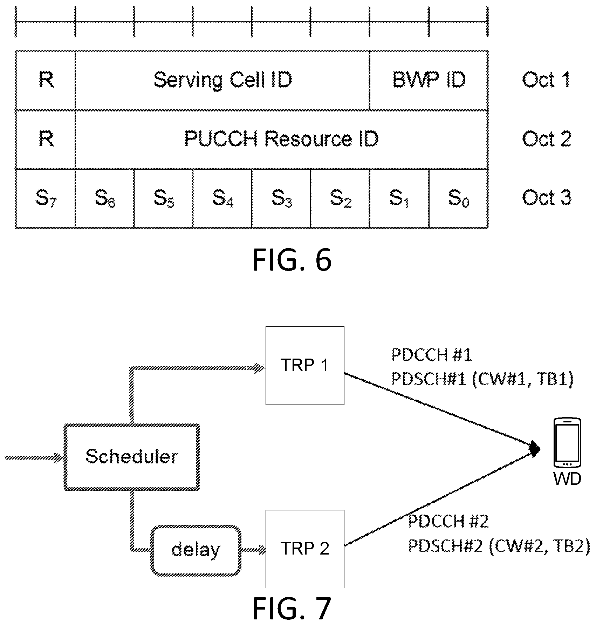

An example of the MAC CE for activation/deactivation for PUCCH spatial relation is shown in FIG. 6. The MAC-CE message contains (1) the ID of the PUCCH resource, and (2) an indicator of which of the 8 configured spatial relations in *PUCCL_SpatialRelationInfo* is selected (given by the 8 bits $S_0$, $S_1$, $S_2$, ...., $S_7$). The MAC CE also includes the Serving Cell ID for which the MAC CE applies, and the BWP ID (bandwidth part ID) which indicates the UL BWP for which the MAC CE applies as the codepoint of the DCI bandwidth part indicator field as specified in 3GPP TS 38.212.

In addition to proving the spatial relation for PUCCH, each PUCCH_SpatialRelationInfo also provides the ID for the Reference RS (i.e., pucch-PathlossReferenceRS-Id) on which pathloss may be estimated for the purposes of PUCCH power control. The pucch-PathlossReferenceRS can be either an CSI-RS or SSB.

```
PUCCH-SpatialRelationInfo ::=          SEQUENCE {
    pucch-SpatialRelationInfoId        PUCCH-SpatialRelationInfoId,
    servingCellId                      ServCellIndex                      \\OPTIONAL,
-- Need S
    referenceSignal                    CHOICE {
        ssb-Index                      SSB-Index,
        csi-RS-Index                   NZP-CSI-RS-ResourceId,
        srs                            SEQUENCE {
                                           resource          SRS-ResourceId,
                                           uplinkBWP         BWP-Id
                                       }
    },
    pucch-PathlossReferenceRS-Id       PUCCH-PathlossReferenceRS-Id,
    p0-PUCCH-Id                        P0-PUCCH-Id,
    closedLoopIndex                    ENUMERATED { i0, i1 }
}
```

Document WO 2018/228487 A1 discloses control information for scheduling a transmission resource for downlink and uplink communications between one or more TRPs and one or more UEs. One Physical Downlink Control Channel (PDCCH) for DL control information transmission is assumed to carry at least one assignment or scheduling information block for at least one Physical Downlink Shared Channel (PDSCH) for DL data transmission or for at least one Physical Uplink Shared Channel (PUSCH) for UL data transmission. Embodiments provide methods of providing configuration information that can be used by a user equipment (UE) to determine transmission mode for the PDSCH and PUSCH as well as information to determine where to monitor for the PDSCH, PUSCH and PUCCH information.

Document "UCI enhancements for URLLC", vivo, 3GPP draft, R1-1900127, discloses enhancements to UCI. The following proposals were made. Proposal 1: UEs with single service is prioritized in the design of eURLLC UCI. Proposal 2: To separate HARQ-ACK multiplexing windows for different PUCCHs, Rel-15 mechanism can be reused but with a smaller time-domain granularity (e.g. sub-slot) instead of a slot. In particular, the sub-slot length is configured by RRC, the whole slot is partitioned into multiple sub-slots regardless of DL/UL configuration for the slot, a PDSCH can be transmitted across sub-slots. HARQ-ACK timing K1 is derived relative to the sub-slot boundary containing the last symbol of PDSCH, and a PUCCH transmission is confined within a sub-slot. Proposal 3: For K1 and PUCCH starting symbol indication, it is proposed that K1 is reinterpreted in sub-slot level: K1 indicates the number of sub-slots between PUCCH transmission and the sub-slot containing the last symbol of PDSCH, and that the PUCCH starting symbol is relative to the boundary of sub-slot indicated by K1. Proposal 4: For UEs with single service, single PUCCH resource set configuration should be investigated firstly. Proposal 5: Per CORESET PUCCH resource configuration should be considered. Proposal 6: PUCCH resource indication by PRI can be reused. With only one configured PUCCH RESET, the upper bound of the UCI payload size for that RESET shall not be restricted to up to 2-bits. Proposal 7: At most 14 PUCCHs carrying HARQ-ACK in a slot should be supported. Proposal 8: For eURLLC UCI design, dynamic HARQ-ACK codebook is prioritized over semi-static HARQ-ACK codebook. Proposal 9: Codebook determination based on sub-slot level should be supported for eURLLC.

EP 3 883 136 A1 discloses a wireless communication method and a device. The method comprises receiving association indication information; and determining, according to the association relationship indication information, that the association exists among a plurality of first CORESETs, the plurality of first CORESETs sharing first common quasi co-location information.

SUMMARY

According to the present disclosure, methods, a computer-readable medium, a wireless device and a network node according to the independent claims are provided. Developments are set forth in the dependent claims. The invention is defined by the appended claims.

According to one aspect of the present disclosure, a method performed by a wireless device, WD, according to claim 1 is provided.

According to another aspect of the present disclosure, a wireless device, WD, according to claim 12

According to yet another aspect of the present disclosure, a method performed by a network node according to claim 7 is provided.

According to another aspect of the present disclosure, a network node according to claim 14 is provided.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a diagram of a NR time-domain structure with 15kHz subcarrier spacing;
FIG. 2 is a diagram of an NR physical resource grid;
FIG. 3 is a diagram of a transmission structure of precoded spatial multiplexing mode in NR and LTE;
FIG. 4 is a diagram of NR MIMO data transmission over multiple antennas;
FIG. 5 is a diagram of an example of using spatial relation for PUCCH;
FIG. 6 is a diagram of PUCCH spatial relation activation/deactivation MAC CE;
FIG. 7 is an example of NC-JT with a single scheduler;
FIG. 8 is an example of NC-JT with independent schedulers;
FIG. 9 is a schematic diagram of an exemplary network architecture illustrating a communication system connected via an intermediate network to a host computer according to the principles in the present disclosure;
FIG. 10 is a block diagram of a host computer communicating via a network node with a wireless device over an at least partially wireless connection according to some embodiments of the present disclosure;
FIG. 11 is a flowchart illustrating exemplary methods implemented in a communication system including a host computer, a network node and a wireless device for executing a client application at a wireless device according to some embodiments of the present disclosure;
FIG. 12 is a flowchart illustrating exemplary methods implemented in a communication system including a host computer, a network node and a wireless device for receiving user data at a wireless device according to some embodiments of the present disclosure;
FIG. 13 is a flowchart illustrating exemplary methods implemented in a communication system including a host computer, a network node and a wireless device for receiving user data from the wireless device at a host computer according to some embodiments of the present disclosure;
FIG. 14 is a flowchart illustrating exemplary methods implemented in a communication system including a host computer, a network node and a wireless device for receiving user data at a host computer according to some embodiments of the present disclosure;
FIG. 15 is a flowchart of an exemplary process in a network node according to some embodiments of the present disclosure;
FIG. 16 is a flowchart of an exemplary process in a wireless device according to some embodiments of the present disclosure;
FIG. 17 is a diagram of an example of configuring a single CORESET group wtih two CORESETS for multiple TRP transmission where HARQ A/N for two TBs are jointly encoded and transmitted in a single PUCCH;
FIG. 18 is a diagram of an example of configuring two CORESET groups each with one CORESET for multiple TRP transmission where HARQ A/N associated with PDCCHs detected in different CORESET groups is reported in different PUCCH resources;
FIG. 19 is a diagram of an example of partitioning PUCCH resources between two CORESET groups by restricting PRI values in each CORESET group;
FIG. 20 is a diagram illustrating retransmission of a TB via a different TRP; and
FIG. 21 is a diagram illustrating an embodiment of Example 5.

DETAILED DESCRIPTION

Non-coherent Joint Transmission (NC-JT) over multiple transmission points or panels (TRP)

NC-JT refers to MIMO data transmission over multiple TRPs in which different MIMO layers are transmitted over different TRPs. An example is shown in FIG. 7, where data are sent to a wireless device over two TRPs (e.g., TRP 1 and TRP 2), each TRP carrying one TB mapped to one code word. When the wireless device has 4 receive antennas while each of the TRPs has only 2 transmit antennas, the wireless device can support up to 4 MIMO layers but each TRP can maximally transmit 2 MIMO layers. In this case, by transmitting data over two TRPs to the wireless device, the peak data rate to the wireless device can be increased as up to 4 aggregated layers from the two TRPs can be used. This is beneficial when the traffic load and thus the resource utilization, is low in each TRP. In this example, a single scheduler is used to schedule data over the two TRPs. When the delay is zero, it is generally referred to as ideal backhaul (BH) between the two TRPs. In practice, the delays are much smaller than the cyclic prefix used in the transmission, so the impact of the delay is negligible at the receiver.

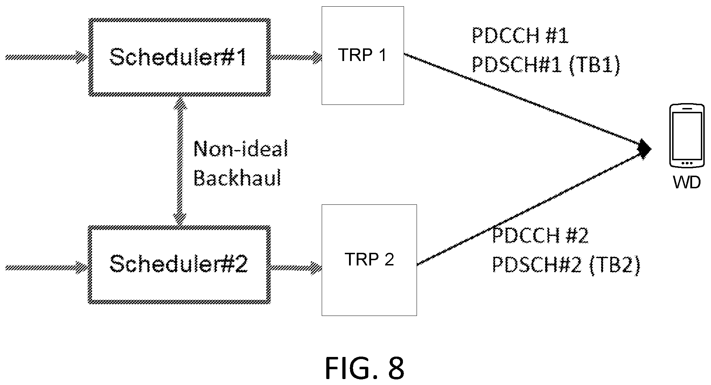

In another scenario, as shown in FIG. 8, for example, independent schedulers are used in each TRP (TRP 1 and TRP 2). In this case, only semi-static to semi-dynamic coordination between the two schedulers can be done due the non-ideal backhaul, i.e., backhaul with large delay and/or delay variations which are comparable to the cyclic prefix length or in some cases even longer, up to several milliseconds.

In Radio Access Network (RAN)1# adhoc meeting NR_AH_1901, it was considered that, for multiple-PDCCH based multi-TRP/panel downlink transmission for eMBB (enhanced mobile broad band), separate ACK/NACK payload/-feedback for multiple received PDSCHs may be supported. The details on PUCCH carrying separate ACK/NACK payload/feedback are to be further studied. Also, whether to additionally support joint ACK/NACK payload/feedback for received PDSCHs is for further study.

It has been considered to configure separate "PDCCH-config" and 'PUCCH-Config" pairs for each TRP. A separate PDCCH-Config and PUCCH-Config would allow a wireless device to know which TRP a detected PDCCH is transmitted from and find the corresponding PUCCH resource for transmitting HARQ ACK/NACK. In NR 3GPP Rel-15, for each carrier or serving cell, a wireless device is configured with a PDCCH-Config IE which include all parameters for the wireless device to receive PDCCH on the carrier or cell.

It has also been considered to dynamically indicate TRP information through one or more of the followings:

-    Explicit bit in the DCI for dynamic TRP differentiation
-    Re-interpretation of the existing DCI fields for dynamic TRP differentiation, e.g.,

     ○ HARQ process ID field:
     ○ TCI field:
     ○ Antenna port(s) field:

-    Other fields such as DMRS sequence initialization field or PRI field
-    Dynamic TRP differentiation based on the configured CORESET / search space to monitor the corresponding DCI from TRP 1 or TRP 2
-    Using different CRC masks (e.g. different RNTIs) for reception of DCIs from TRP 1 and TRP 2.

It has also been considered to introduce different PUCCH resource groups within each PUCCH resource set, where different groups correspond to PUCCH resources that can be used for transmission to different TRPs. Introducing the notation of two PUCCH resource groups within each PUCCH resource set enables using the full range of PRI field in the DCI separately for each TRP.

Another consideration may be dividing all configured CORESETS into two groups for DL control configuration, each associated with one TRP. In addition, two PUCCH-Config and two PDSCH-Config, each associated with on TRP, were proposed. In NR 3GPP Rel-15, a PUCCH-Config IE includes all information for a wireless device to transmit PUCCH. Similarly, a PDSCH-Config IE includes all information for a wireless device to receive PDSCH.

One problem with the existing proposals of per TRP PDCCH or CORESET Configuration is how to support both separate A/N payloads with separate PUCCH resources in case of non-ideal backhaul and joint HARQ A/N feedback with a single PUCCH in case of ideal-backhaul. With per TRP PDCCH and PUCCH configuration, only separate A/N payloads with separate PUCCH resources can be supported.

Another problem with the existing proposals with per TRP PUCCH resource allocation is potentially large PUCCH overhead. Due to slow semi-static coordination between TRPs, the unused PUCCH resources allocated to one TRP cannot be used for PDSCH transmission by another TRP. The unused resources are thus wasted.

Some embodiments of the present disclosure advantageously provide methods, systems, and apparatuses for assignment of downlink control channel candidates to monitor and implementation of feedback associated with the downlink control channel candidates.

One or more embodiments of the disclosure include one or more of the following:

- Implicit linkage of CORESET groups to TRPs for multi-TRP transmission so that when more than one CORESET group is configured, separate HARQ A/N feedback per CORESET group would be reported in separate PUCCH resources. Joint HARQ A/N feedback would be performed when a single CORESET group is configured. Each CORESET can be linked to more than one TRP;
- Wireless device transparent PUCCH resource sharing between TRPs with PRI (PUCCH Resource Indicator) value restriction per CORESET group; and
- TB identification in case of joint HARQ A/N with ideal backhaul.

One or more embodiments, described herein support both multi-TRP transmission with non-ideal backhaul where separate HARQ A/N payloads transmission in separate PUCCH resources and multi-TRP transmission with ideal backhaul where joint HARQ A/N feedback in a single PUCCH resource.

With wireless device transparent PUCCH resource sharing between TRPs, PUCCH overhead can be reduced. This is justified as that NC-JT is only beneficial at very low system load and low PUCCH resource utilization is expected.

Before describing in detail exemplary embodiments, it is noted that the embodiments reside primarily in combinations of apparatus components and processing steps related to assignment of downlink control channel candidates to monitor and implementation of feedback associated with the downlink control channel candidates. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, integrated access and backhaul (IAB) node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node. One or more TRPs may be comprised in one or more network nodes.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, IAB node, access point, radio access point, Remote Radio Unit (RRU) Remote Radio Head (RRH).

The term resource used herein may correspond to any type of physical resource or radio resource expressed in terms of length of time and/or frequency. Signals are transmitted or received by a radio node over a time resource. Examples of time resources are: symbol, time slot, subframe, radio frame, Transmission Time Interval (TTI), interleaving time, etc.

An indication generally may explicitly and/or implicitly indicate the information it represents and/or indicates. Implicit indication may for example be based on position and/or resource used for transmission. Explicit indication may for example be based on a parametrization with one or more parameters, and/or one or more index or indices, and/or one or more bit patterns representing the information. It may in particular be considered that control signaling as described herein, based on the utilized resource sequence, implicitly indicates the control signaling type.

Transmitting in downlink may pertain to transmission from the network or network node to the terminal. Transmitting in uplink may pertain to transmission from the terminal to the network or network node. Transmitting in sidelink may pertain to (direct) transmission from one terminal to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Receiving information (e.g., configuration information, control channel information, scheduling information, data, HARQ feedback, etc.) may comprise receiving one or more information messages. It may be considered that receiving signaling comprises demodulating and/or decoding and/or detecting, e.g. blind detection of, one or more messages, in particular a message carried by the signaling, e.g. based on an assumed set of resources, which may be searched and/or listened for the information. It may be assumed that both sides of the communication are aware of the configurations, and may determine the set of resources to transmit and/or receive the information based at least in part on the configuration.

Configuring a terminal or wireless device or node may involve instructing and/or causing the wireless device or node to change its configuration, e.g., at least one setting and/or register entry and/or operational mode. A terminal or wireless device or node may be adapted to configure itself, e.g., according to information or data in a memory of the terminal or wireless device. Configuring a node or terminal or wireless device by another device or node or a network may refer to and/or comprise transmitting information and/or data and/or instructions to the wireless device or node by the other device or node or the network, e.g., allocation data (which may also be and/or comprise configuration data) and/or scheduling data and/or scheduling grants. Configuring a terminal may include sending allocation/configuration data to the terminal indicating which modulation and/or encoding to use. A terminal may be configured with and/or for scheduling data and/or to use, e.g., for transmission, scheduled and/or allocated uplink resources, and/or, e.g., for reception, scheduled and/or allocated downlink resources, scheduled to monitor one or more PDCCH candidates. Uplink resources and/or downlink resources may be scheduled and/or provided with allocation or configuration data.

Signaling may comprise one or more signals and/or symbols. Reference signaling may comprise one or more reference signals and/or symbols. Data signaling may pertain to signals and/or symbols containing data, in particular user data and/or payload data and/or data from a communication layer above the radio and/or physical layer/s. It may be considered that demodulation reference signaling comprises one or more demodulation signals and/or symbols. Demodulation reference signaling may in particular comprise DMRS according to NR, 3GPP and/or LTE technologies. Demodulation reference signaling may generally be considered to represent signaling providing reference for a receiving device like a terminal to decode and/or demodulate associated data signaling or data. Demodulation reference signaling may be associated to data or data signaling, in particular to specific data or data signaling. It may be considered that data signaling and demodulation reference signaling are interlaced and/or multiplexed, e.g. arranged in the same time interval covering e.g. a subframe or slot or symbol, and/or in the same time-frequency resource structure like a resource block. A resource element may represent a smallest time-frequency resource, e.g. representing the time and frequency range covered by one symbol or a number of bits represented in a common modulation. A resource element may e.g. cover a symbol time length and a subcarrier, in particular in NR, 3GPP and/or LTE standards. A data transmission may represent and/or pertain to transmission of specific data, e.g. a specific block of data and/or transport block. Generally, demodulation reference signaling may comprise and/or represent a sequence of signals and/or symbols, which may identify and/or define the demodulation reference signaling.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments provide assignment of downlink control channel candidates to monitor and implementation of feedback associated with the downlink control channel candidates.

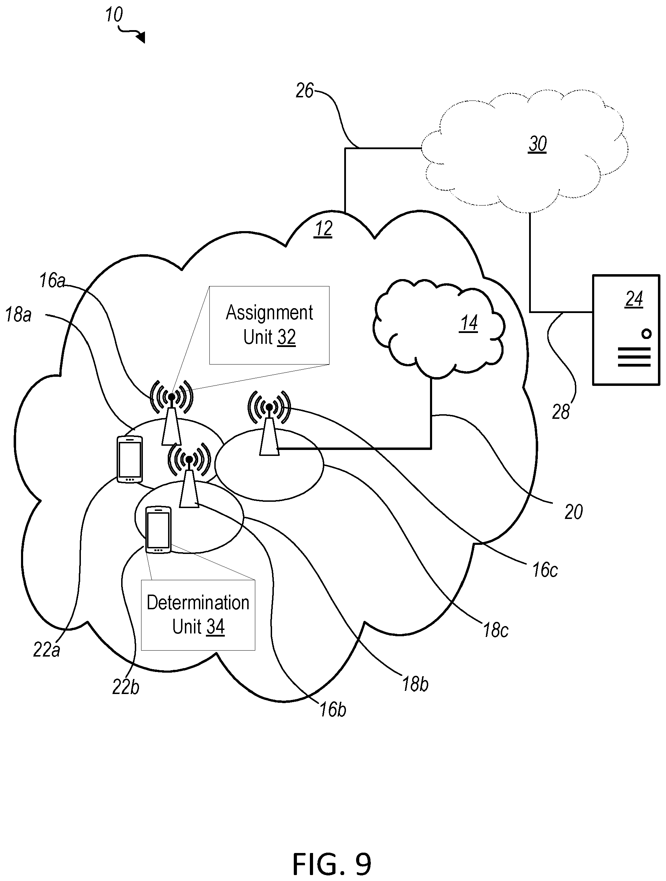

Referring again to the drawing figures, in which like elements are referred to by like reference numerals, there is shown in FIG. 9 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 9 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 may be configured to include an assignment unit 32 which is configured to cause the network node 16 to:

transmit:

a physical downlink control channel, PDCCH, configuration of a first group of one or more first control resource sets, CORESETs, having a first group index and a second group of one or more second control resource sets, CORESETs, having a second group index; and
a physical uplink control channel, PUCCH, configuration of a plurality number of PUCCH resource sets, each PUCCH resource set including a plurality number of PUCCH resources;

transmit a first PDCCH in the first group of one or more first CORESETs and a second PDCCH in the second group of one or more second CORESETs;

transmit a first physical downlink shared channel, PDSCH, scheduled by the first PDCCH and a second PDSCH scheduled by the second PDCCH; and

receive a first Hybrid Automatic Repeat reQuest, HARQ, acknowledgement/non-acknowledgement, A/N, associated with the first PDSCH and a second HARQ A/N associated with the second PDSCH.

In some embodiments, a network node 16 is configured to include an assignment unit 32 which is configured to, for example, indicate an assignment of downlink control channel candidates.

A wireless device 22 may be configured to include a determination unit 34 which is configured to cause the wireless device 22 to:

receive, from the one or more network nodes 16:

a physical downlink control channel, PDCCH, configuration of a first group of one or more first control resource sets, CORESETs, having a first group index and a second group of one or more second control resource sets, CORESETs, having a second group index; and
a physical uplink control channel, PUCCH, configuration of a plurality number of PUCCH resource sets, each PUCCH resource set including a plurality number of PUCCH resources;

monitor a first PDCCH in the first group of one or more first CORESETs and a second PDCCH in the second group of one or more second CORESETs;
receive a first physical downlink shared channel, PDSCH, scheduled by the first PDCCH and a second PDSCH scheduled by the second PDCCH; and
transmit, to the one or more network nodes, a first Hybrid Automatic Repeat reQuest, HARQ, acknowledgement/non-acknowledgement, A/N, associated with the first PDSCH and a second HARQ A/N associated with the second PDSCH.

In some embodiments, a wireless device 22 is configured to include a determination unit 34 which is configured to, for example, implement an assignment for monitoring downlink control channel candidates and provide feedback, i.e., HARQ feedback, based at least in part on the monitoring.

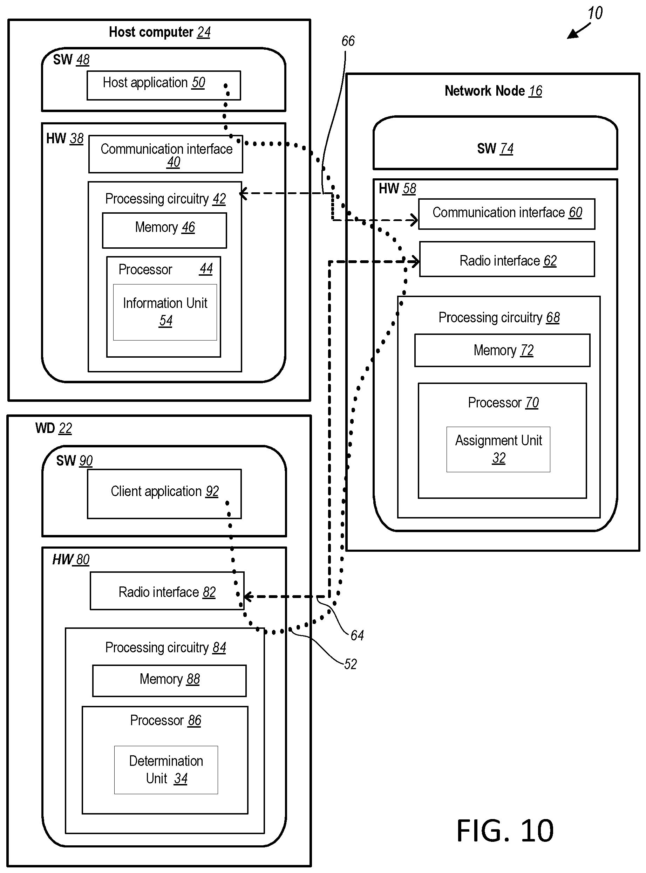

Example implementations, in accordance with an embodiment, of the WD 22, network node 16 and host computer 24 discussed in the preceding paragraphs will now be described with reference to FIG. 10. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22. The processing circuitry 42 of the host computer 24 may include a information unit 54 configured to enable the service provider to transmit, receive, process, determine, forward, etc., information related to assignment of downlink control channel candidates for monitoring and feedback related to the monitoring.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

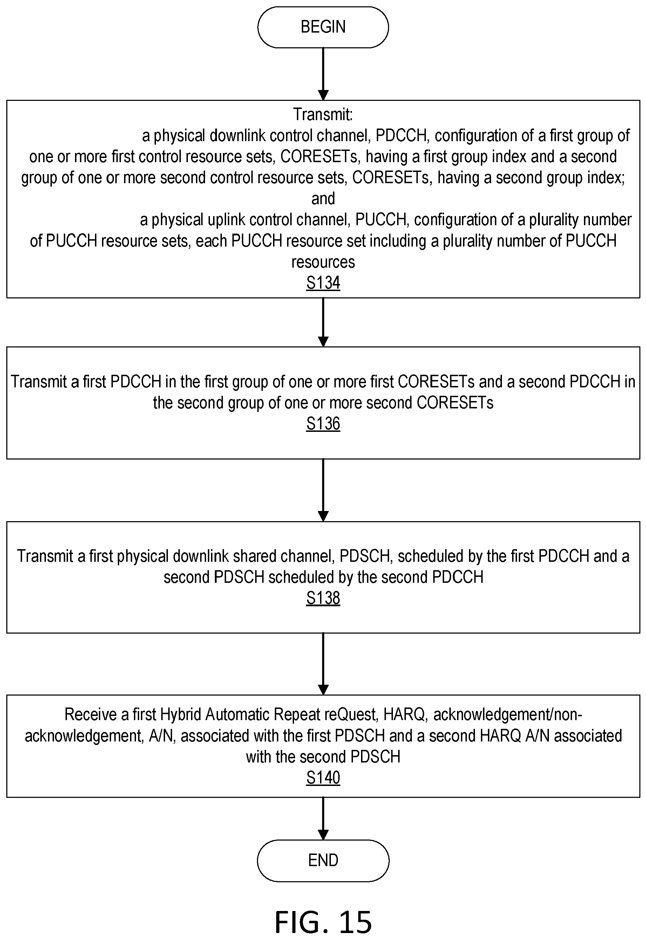

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include assignment unit 32 configured to perform one or more network node 16 functions as described herein (e.g., network node processes described with reference to FIG. 15 as well as the other figures).

In some embodiments, the assignment unit 32 in processing circuitry 68 is configured to, in conjunction with the radio interface 62, cause the network node 16 to transmit the configurations and/or the channels and/or receive HARQ(s) according to one or more of the embodiments in the present disclosure.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

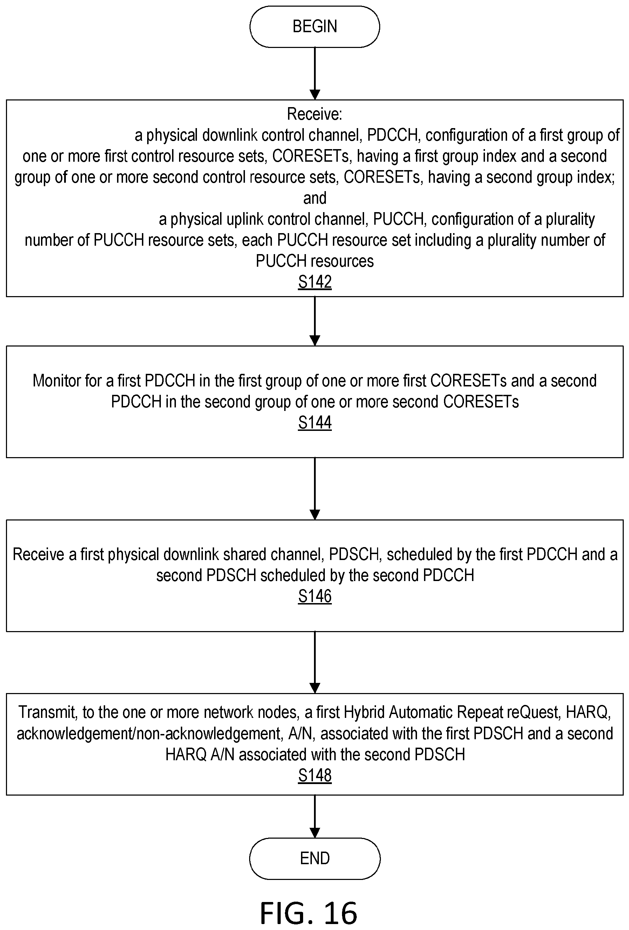

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a determination unit 34 configured to perform one or more wireless device 22 functions as described herein (e.g., wireless device processes described with reference to FIG. 16 as well as the other figures).

In some embodiments, the determination unit 34 in processing circuitry 84 is configured to, in conjunction with the radio interface 82, cause the wireless device 22 to receive the configurations and/or the channels and/or transmit HARQ(s) according to one or more of the embodiments in the present disclosure.

In some embodiments, the inner workings of the network node 16, WD 22, and host computer 24 may be as shown in FIG. 10 and independently, the surrounding network topology may be that of FIG. 9.

In FIG. 10, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 9 and 10 show various "units" such as assignment unit 32, and determination unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

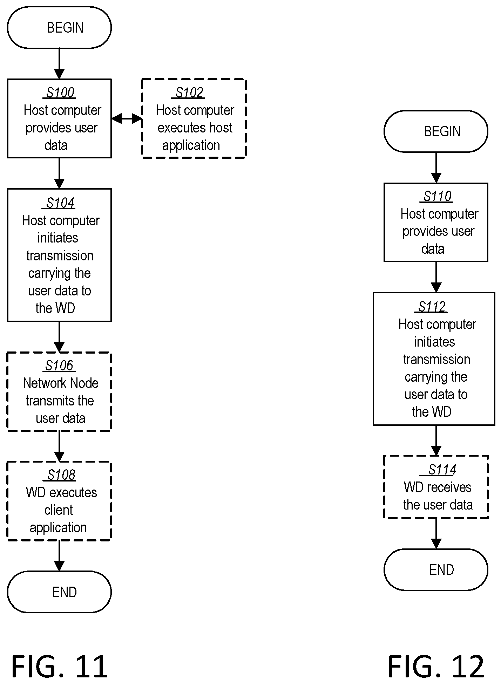

FIG. 11 is a flowchart illustrating an exemplary method implemented in a communication system, such as, for example, the communication system of FIGS. 9 and 10, in accordance with one embodiment. The communication system may include a host computer 24, a network node 16 and a WD 22, which may be those described with reference to FIG. 10.

In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 12 is a flowchart illustrating an exemplary method implemented in a communication system, such as, for example, the communication system of FIG. 9, in accordance with one embodiment. The communication system may include a host computer 24, a network node 16 and a WD 22, which may be those described with reference to FIGS. 9 and 10. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

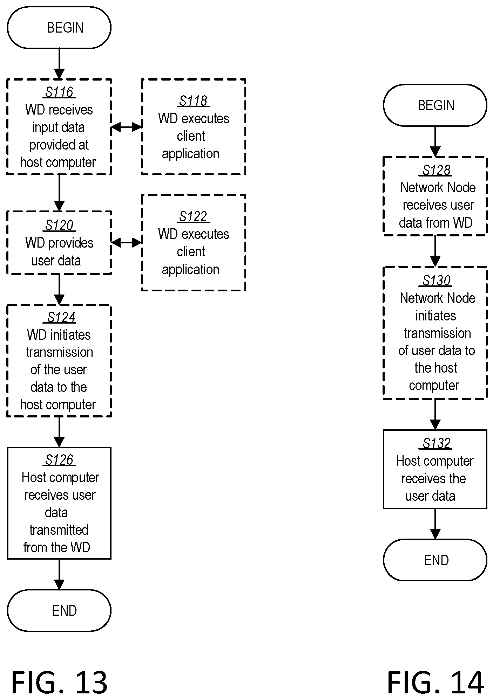

FIG. 13 is a flowchart illustrating an exemplary method implemented in a communication system, such as, for example, the communication system of FIG. 9, in accordance with one embodiment. The communication system may include a host computer 24, a network node 16 and a WD 22, which may be those described with reference to FIGS. 9 and 10. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 14 is a flowchart illustrating an exemplary method implemented in a communication system, such as, for example, the communication system of FIG. 9, in accordance with one embodiment. The communication system may include a host computer 24, a network node 16 and a WD 22, which may be those described with reference to FIGS. 9 and 10. In an optional first step of the method, in accordance with the teachings of the embodiments described throughout this disclosure, the network node 16 receives user data from the WD 22 (Block S 128). In an optional second step, the network node 16 initiates transmission of the received user data to the host computer 24 (Block S 130). In a third step, the host computer 24 receives the user data carried in the transmission initiated by the network node 16 (Block S132).

FIG. 15 is a flowchart of an exemplary process in a network node 16 in accordance with one or more embodiments of the disclosure. One or more Blocks and/or functions performed by network node 16 may be performed by one or more elements of network node 16 such as by assignment unit 32 in processing circuitry 68, processor 70, communication interface 60, radio interface 62, etc. In one or more embodiments, network node 16 such as via one or more of processing circuitry 68, processor 70, radio interface 62 and communication interface 60 is configured to transmit (Block S 134): a physical downlink control channel, PDCCH, configuration of a first group of one or more first control resource sets, CORESETs, having a first group index and a second group of one or more second control resource sets, CORESETs, having a second group index; and a physical uplink control channel, PUCCH, configuration of a plurality number of PUCCH resource sets, each PUCCH resource set including a plurality number of PUCCH resources. Network node 16 such as via one or more of processing circuitry 68, processor 70, radio interface 62 and communication interface 60 is configured to transmit (Block S 136) a first PDCCH in the first group of one or more first CORESETs and a second PDCCH in the second group of one or more second CORESETs. Network node 16 such as via one or more of processing circuitry 68, processor 70, radio interface 62 and communication interface 60 is configured to transmit (Block S 138) a first physical downlink shared channel, PDSCH, scheduled by the first PDCCH and a second PDSCH scheduled by the second PDCCH. Network node 16 such as via one or more of processing circuitry 68, processor 70, radio interface 62 and communication interface 60 is configured to receive (Block S 140) a first Hybrid Automatic Repeat reQuest, HARQ, acknowledgement/non-acknowledgement, A/N, associated with the first PDSCH and a second HARQ A/N associated with the second PDSCH.

In some embodiments, the first group index is different from the second group index. In some embodiments, the first group of one or more CORESETs is associated with at least one first Transmission Configuration Indicator, TCI, state and the second group of one or more CORESETs is associated with at least one second TCI state, the at least one first TCI state being different from the at least one second TCI state. In some embodiments, the processing circuitry 68 is further configured to cause the network node 16 to receive the first HARQ A/N associated with the first PDSCH and the second HARQ A/N associated with the second PDSCH by being configured to cause the network node 16 to receive the first HARQ A/N associated with the first PDSCH on a first PUCCH resource and the second HARQ A/N associated with the second PDSCH on a second PUCCH resource. In some embodiments, the first PUCCH resource is indicated by a first PUCCH resource indicator, PRI, included in the first PDCCH and the second PUCCH resource is indicated by a second PRI included in the second PDCCH. In some embodiments, the first PRI is different from the second PRI. In some embodiments, the first PUCCH resource is different from the second PUCCH resource. In some embodiments, the first group index equals to the second group index.

In some embodiments, the processing circuitry 68 is further configured to cause the network node 16 to receive the first HARQ A/N associated with the first PDSCH and the second HARQ A/N associated with the second PDSCH by being configured to cause the network node 16 to receive the first HARQ A/N associated with the first PDSCH and the second HARQ A/N associated with the second PDSCH on a same PUCCH resource of the PUCCH resources configured by the PUCCH configuration. Further, the first group index is included in each of the one or more first CORESETS and the second group index is included in each of the one or more second CORESETS.

In one or more embodiments, network node 16 such as via one or more of processing circuitry 68, processor 70, radio interface 62 and communication interface 60 is configured to assign downlink control channel candidates associated with at least one group of downlink resources for the wireless device to monitor where the downlink control channel candidates is associated with a plurality of Transmission Reception Points, TRPs. In one or more embodiments, the downlink control channel candidates correspond to one or more CORESETs that are described herein. In one or more embodiments, the at least one group of downlink resources corresponds to at least one CORESET group that are described herein. In one or more embodiments, the assignment of downlink control channel candidates, i.e., PDCCH candidates, is indicated to the wireless device as described herein. In one or more embodiments, network node 16 such as via one or more of processing circuitry 68, processor 70, radio interface 62 and communication interface 60 is configured to transmit PDCCHs in the assigned downlink resources and associated PDSCHs from different TRPs. In one or more embodiments, network node 16 such as via one or more of processing circuitry 68, processor 70, radio interface 62 and communication interface 60 is configured to receive feedback signaling about decoding status of the PDSCHs from the wireless device 22 in at least one resource in an uplink control channel based at least in part on the assignment of the downlink control channel candidates. In one or more embodiments, feedback signaling corresponds to HARQ signaling and/or messaging that are described herein. In one or more embodiments, the feedback signaling is transmitted on PUCCH resources, as described herein. In one or more embodiments, one or more of Blocks may be performed by network node 16 such that one or more of Blocks may be omitted or skipped.

According to one or more embodiments, if the downlink control channel candidates for the wireless device to monitor corresponds to a plurality of groups of downlink resources, the feedback signaling associated with each group of downlink resources is received on separate resources in the uplink control channel. According to one or more embodiments, if the downlink control channel candidates correspond to a group of downlink resources, the feedback signaling is joint feedback signaling associated with each downlink control channel candidates in the group of downlink resources that is received on the same resource in the uplink control channel.

FIG. 16 is a flowchart of an exemplary process in a wireless device 22 according to some embodiments of the present disclosure. One or more Blocks and/or functions performed by wireless device 22 may be performed by one or more elements of wireless device 22 such as by determination unit 34 in processing circuitry 84, processor 86, radio interface 82, etc. In one or more embodiments, wireless device 22 such as via one or more of processing circuitry 84, processor 86 and radio interface 82 is configured to receive (Block S142), from the one or more network nodes: a physical downlink control channel, PDCCH, configuration of a first group of one or more first control resource sets, CORESETs, having a first group index and a second group of one or more second control resource sets, CORESETs, having a second group index; and a physical uplink control channel, PUCCH, configuration of a plurality number of PUCCH resource sets, each PUCCH resource set including a plurality number of PUCCH resources. In one or more embodiments, wireless device 22 such as via one or more of processing circuitry 84, processor 86 and radio interface 82 is configured to monitor (Block S 144) a first PDCCH in the first group of one or more first CORESETs and a second PDCCH in the second group of one or more second CORESETs. In one or more embodiments, wireless device 22 such as via one or more of processing circuitry 84, processor 86 and radio interface 82 is configured to receive (Block S 146) a first physical downlink shared channel, PDSCH, scheduled by the first PDCCH and a second PDSCH scheduled by the second PDCCH. In one or more embodiments, wireless device 22 such as via one or more of processing circuitry 84, processor 86 and radio interface 82 is configured to transmit (Block S148), to the one or more network nodes, a first Hybrid Automatic Repeat reQuest, HARQ, acknowledgement/non-acknowledgement, A/N, associated with the first PDSCH and a second HARQ A/N associated with the second PDSCH.

In some embodiments, the first group index is different from the second group index. In some embodiments, the first group of one or more CORESETs is associated with at least one first Transmission Configuration Indicator, TCI, state and the second group of one or more CORESETs is associated with at least one second TCI state, the at least one first TCI state being different from the at least one second TCI state. In some embodiments, the processing circuitry 84 is further configured to cause the wireless device 22 to transmit the first HARQ A/N associated with the first PDSCH and the second HARQ A/N associated with the second PDSCH by being configured to cause the wireless device 22 to transmit the first HARQ A/N associated with the first PDSCH on a first PUCCH resource and the second HARQ A/N associated with the second PDSCH on a second PUCCH resource. In some embodiments, the first PUCCH resource is indicated by a first PUCCH resource indicator, PRI, included in the first PDCCH and the second PUCCH resource is indicated by a second PRI included in the second PDCCH. In some embodiments, the first PRI is different from the second PRI.

In some embodiments, the first PUCCH resource is different from the second PUCCH resource. In some embodiments, the first group index equals to the second group index. In some embodiments, the processing circuitry 84 is further configured to cause the wireless device 22 to transmit the first HARQ A/N associated with the first PDSCH and the second HARQ A/N associated with the second PDSCH by being configured to cause the wireless device 22 to transmit the first HARQ A/N associated with the first PDSCH and the second HARQ A/N associated with the second PDSCH on a same PUCCH resource of the PUCCH resources configured by the PUCCH configuration. Further, the first group index is included in each of the one or more first CORESETS and the second group index is included in each of the one or more second CORESETS.

In one or more embodiments, wireless device 22 such as via one or more of processing circuitry 84, processor 86 and radio interface 82 is configured to monitor PDCCHs in assigned downlink control channel candidates associated with at least one group of downlink resources where the downlink control channel candidates are associated with a plurality of Transmission Reception Points, TRPs. In one or more embodiments, wireless device 22 such as via one or more of processing circuitry 84, processor 86 and radio interface 82 is configured to receive PDCCHs in the assigned downlink resources and associated PDSCHs. In one or more embodiments, wireless device 22 such as via one or more of processing circuitry 84, processor 86 and radio interface 82 is configured to transmit feedback signaling about decoding status of the PDSCHs in at least one resource in an uplink control channel based at least in part on the assignment of the downlink control channel candidates over which the PDCCHs are received. In one or more embodiments, one or more of Blocks may be performed by wireless device 22 such that one or more of may be omitted or skipped.

In one or more embodiments, the downlink control channel candidates correspond to one or more CORESETs that are described herein. In one or more embodiments, the at least one group of downlink resources corresponds to at least one CORESET group that are described herein. In one or more embodiments, feedback signaling corresponds to HARQ signaling and/or messaging that are described herein. In one or more embodiments, the assignment of downlink control channel candidates, i.e., PDCCH candidates, is indicated to the wireless device as described herein.

According to one or more embodiments, if the downlink control channel candidates for the wireless device to monitor corresponds to a plurality of groups of downlink resources, the feedback signaling associated with each group of downlink resources is received on separate resources in the uplink control channel. According to one or more embodiments, if the downlink control channel candidates correspond to a group of downlink resources, the feedback signaling is joint feedback signaling associated with each downlink control channel candidates in the group of downlink resources that is received on the same resource in the uplink control channel.

Having generally described arrangements for assignment of downlink control channel candidates to monitor and implementation of feedback associated with the downlink control channel candidates, details for these arrangements, embodiments, functions and processes are provided as follows, and which may be implemented by the network node 16, wireless device 22 and/or host computer 24.

Example 1: Explicitly configure CORESET Groups

For multi-TRP PDSCH transmission with multiple PDCCHs, a CORESET group may be configured to a wireless device 22. A CORESET group can comprise of one or more CORESETs, e.g., PDCCH candidates. This can be done by including a CORESET Group identifier/identity (ID) in each CORESET configuration IE. The maximum number of CORESET groups can also be configured (e.g., via RRC signaling). For example, *maxNrofControlResourceSetGroups =2*.

Example of a *ControlResourceSet* information element where one or more fields are indicated in bold, below.

-- ASN1START

```
-- TAG-CONTROLRESOURCESET-START

ControlResourceSet ::=             SEQUENCE {
    controlResourceSetId           ControlResourceSetId,
    controlResourceSetGroupId              ControlResourceSetGroupId
    frequencyDomainResources       BIT STRING (SIZE (45)),
    duration                       INTEGER (1..maxCoReSetDuration),
    cce-REG-MappingType            CHOICE {
        interleaved                SEQUENCE {
            reg-BundleSize             ENUMERATED {n2, n3, n6},
            interleaverSize            ENUMERATED {n2, n3, n6},
            shiftIndex                 INTEGER(0..maxNrofPhysicalResourceBlocks-
1)            OPTIONAL   -- Need S
        },
        nonInterleaved             NULL
    },
    precoderGranularity            ENUMERATED {sameAsREG-bundle,
allContiguousRBs},
        tci-StatesPDCCH-ToAddList          SEQUENCE(SIZE (1..maxNrofTCI-
StatesPDCCH)) OF TCI-StateId       OPTIONAL,   -- Need N
        tci-StatesPDCCH-ToReleaseList      SEQUENCE(SIZE (1..maxNrofTCI-
StatesPDCCH)) OF TCI-StateId       OPTIONAL,   -- Need N
    tci-PresentInDCI               ENUMERATED {enabled}
OPTIONAL,   -- Need S
        pdcch-DMRS-ScramblingID        INTEGER (0..65535)
OPTIONAL,   -- Need S
        ...
}

ControlResourceSetGroupId ::=          INTEGER
(0..maxNrofControlResourceSetGroups-1)


-- TAG-CONTROLRESOURCESET-STOP

-- ASN1STOP
```

HARQ A/Ns, e.g., feedback signaling, for PDCCHs detected in a CORESET or CORESETs belonging to the same CORESET group and with a value(s) of *PDSCH-to-HARQ_ feedback timing indicator* indicating a same slot for the PUCCH transmission may be reported in a same PUCCH resource.

For PDCCHs detected in CORESETs belonging to different CORESET groups and with a value(s) of *PDSCH-to-HARQ_feedback timing indicator* indicating a same slot for the PUCCH transmission, separate PUCCH resources may be used for HARQ A/Ns for PDCCHs detected in different CORESET groups.

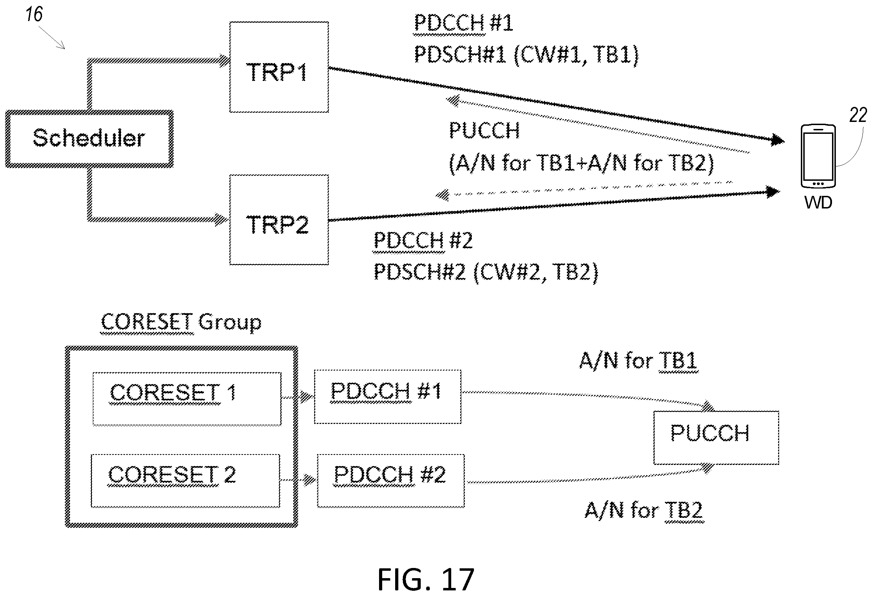

With this example CORESET group configuration, for multi-TRP transmission with ideal backhaul, a single CORESET group with multiple CORESETs may be configured with each CORESET associated with one TRP. In this case, HARQ A/Ns for PDCCHs transmitted from different TRPs in a slot may be aggregated and reported in a same PUCCH resource. An example is shown FIG. 17, where a single CORESET group with two CORESETs each associated with one TRP via TCI state are configured for two TRPs (e.g., TRP1, TRP2). Because PDCCHs are detected in the same CORESET group, the HARQ A/N for the two TBs scheduled in the same slot are multiplexed or jointly encoded and reported in a single PUCCH resource (as shown for example in FIG. 17, where A/N for TB1 and A/N for TB2 are multiplexed or jointly encoded and reported in a single PUCCH resource).

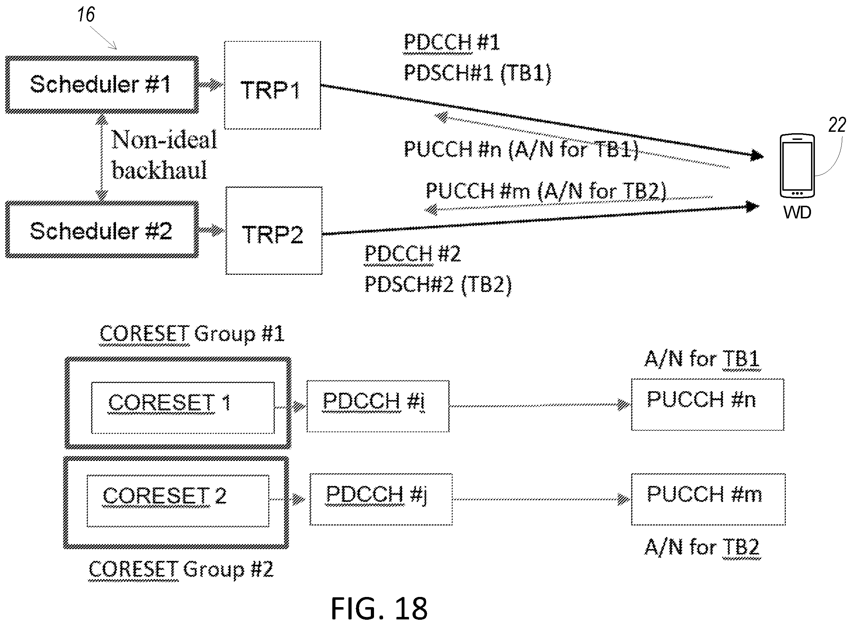

For multi-TRP transmission with non-ideal backhaul, multiple CORESET groups may be configured with each CORESET group associated with one TRP. In this case, HARQ A/Ns for PDCCHs transmitted from different TRPs in a slot may be reported separately in different PUCCH resources. An example is shown FIG. 18, where two CORESET groups (CORESET Group #1 and Group #2) each with one CORESET (CORESET 1 in Group #1 and CORESET 2 in Group #2) and associated with one TRP via TCI state, are configured for two TRPs (e.g., TRP1, TRP2). HARQ A/N for PDCCH detected in different CORESET groups are mapped to different PUCCH resources, i.e., A/N associated with PDCCH #i to PUCCH #n and A/N associated with PDCCH #j to PUCCH #m.

To enable this type of operation, the configuration of PUCCH resource sets for HARQ A/N is in one embodiment CORESET group specific, such that the interpretation of the PRI field in DCI is dependent on the CORESET group of the CORESET where the DCI was received. This may imply that a list of PUCCH resource sets are configured by one or more network nodes 16, where each entry in the list correspond to one CORESET group.

However, it may be wasteful in terms of PUCCH overhead to always configure disjoint sets of PUCCH resources since it is not necessarily so that more than one PUCCH transmission may be needed at the same time, even if multiple CORESET groups are utilized. In an alternative embodiment, the same PUCCH resource sets are configured (e.g., by one or more network nodes 16) for all CORESET groups, and the PRI field in DCI (e.g., transmitted by network node 16) refers to these resource sets. However, when two or more HARQ A/N (transmitted by WD 22) corresponding to different CORESET groups are indicated with the same PRI and the same slot for PUCCH transmission, a rule may be applied so that only one CORESET group's HARQ A/N are transmitted (by wireless device 22) in the indicated PUCCH resource, and the other CORESET groups are assigned other PUCCH resources. In one variant of the embodiment, the PUCCH resource from another PUCCH resource set is selected according to a fixed rule. Alternatively, the PUCCH resource corresponding to another PRI is selected (e.g., by WD 22 and/or network node 16) for the other CORESET groups, according to a fixed rule in specification.

Example 2: on implicit determining CORESET groups

In an alternative to explicitly defining CORESET groups by RRC signaling as in Example 1, the CORESET groups can be implicitly assigned.

In one example, configured CORESET with the same TCI_state identifier belongs to the same CORESET group and with different TCI_state identifier is identified to belong to different CORESET groups.

In another example, the source reference signals (RS) in TCI states may be divided in two groups. CORESET(s) with TCI_states having source RS in the same RS group belong to the same CORESET group.

Note that the term "CORESET group" may not be specified in standards, but the term is used here to define the functionality. Similar functionality as described here as part of the disclosure can be defined in 3GPP specifications without introducing CORESET groups terminology.

Embodiment 3: wireless device 22 transparent PUCCH resource sharing between two TRPs

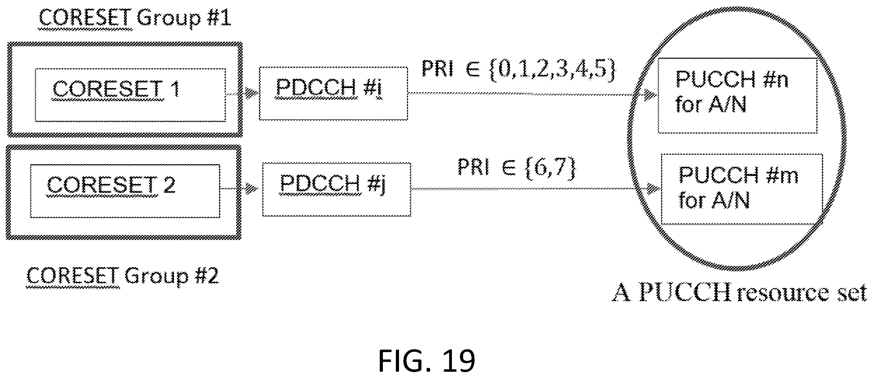

In case of multi-TRP transmission with non-ideal backhaul and with multiple PDCCHs, instead of explicitly configuring separate PUCCH resources for different CORESET groups, the partition of PUCCH resources between CORESET groups can be transparent to a wireless device 22. This can be done by allocating different values of the PUCCH resource indicator (PRI) field to different CORESET groups. For example, when two CORESET groups, {CORESET group #1, CORESET group #2}, are configured (e.g., by network node 16) to a wireless device 22 with CORESET group #1 associated to TRP#1 and CORESET group #2 to TRP#2, PRI values of {0,1,2,3,4, 5} may be mapped to CORESET group #1 and PRI values {6,7} to CORESET group #2. This mapping may be coordinated semi-statically between the two TRPs so that when a PDSCH is scheduled from TRP#1 in CORESET group #1, only PRI values of {0,1,2,3,4, 5} can be allocated. Similarly, if a PDSCH is scheduled from TRP#1 in CORESET group #1, only PRI values of {6,7} can be allocated. But from the wireless device 22 perspective, the same PUCCH configuration as in NR Rel-15 is used. Example 3 is illustrated in FIG. 19.

Example 4: TB identification in case of Joint HARQ A/N

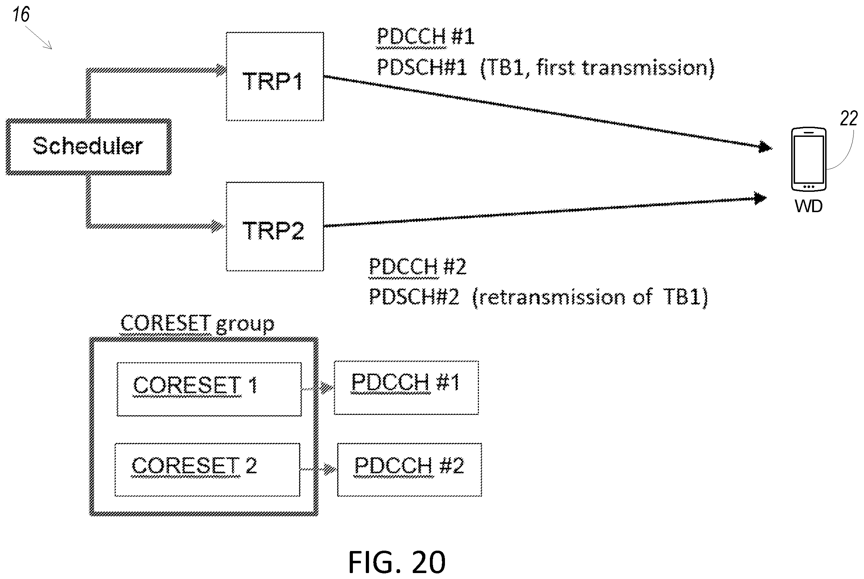

In case of multi-TRP PDSCH transmission with ideal backhaul and with multiple PDCCHs, the number of downlink HARQ processes can be the same as in NR 3GPP Rel-15, i.e., up to 16 HARQ processes, and a HARQ process can be shared by two TRPs. When two PDSCHs, scheduled by two PDCCHs (e.g., by network node 16) with the same HARQ process ID, are received in a slot in a same carrier frequency and if the two PDCCHs are received in two separate CORESETs belonging to the same CORESET group, the A/N for the two TBs are aggregated and reported (e.g., by WD 22) in a single PUCCH. To associate each of the two TBs to the correct HARQ buffer, TB1 and TB2 need to be identified.
In one embodiment, TB1 and TB2 may be identified by the CORESET IDs. For example, TB1 is associated with CORESET #1 and TB2 with CORESET #2. This means that if TB1 is not received successfully (e.g., by WD 22), the retransmissions also need to be scheduled from CORESET #1 (e.g., by network node 16).
In another embodiment, TB1 and TB2 may be identified directly in DCI format 1-1, i.e., when TB2 is disabled in a DCI, TB1 is transmitted. Similarly, if TB1 is disabled in a DCI, TB2 is transmitted. This may allow retransmission of a TB from a different TRP by scheduling the TB in a different CORESET, which may be beneficial in some scenarios. An example is shown in FIG. 20, where the first transmission of TB1 (e.g., by network node 16) is via TRP1 and retransmission is scheduled from TRP2 (e.g., by network node 16).
It should be understood that although the scheduler(s) and TRPs arrangements shown in FIGS. 17-21 are shown as belonging to one network node 16 for illustrative purposes, other embodiments may implement such scheduler(s) and TRP(s) arrangements in two or more network nodes 16 (e.g., each TRP may be comprised in a network node, each scheduler may be comprised in a network node, a network node may include more than one TRP and/or more than one scheduler, etc.).

Example 5: Implicit PUCCH resource groups using Spatial Relation information

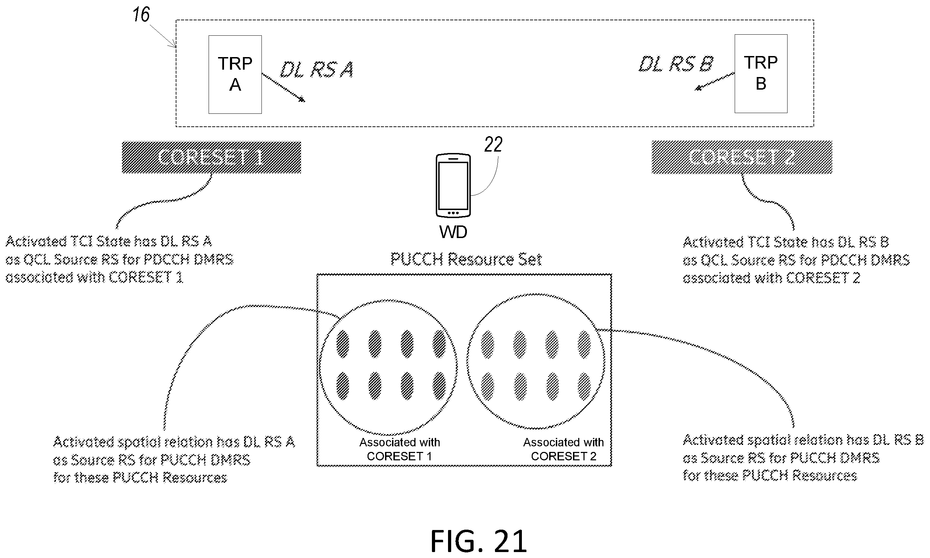

In this embodiment, the PUCCH resources to be used for a PDSCH transmitted from a given TRP may be implicitly determined using the spatial relation information of the PUCCH resources. An example for this embodiment is given in FIG. 21 for a multi-PDCCH scenario with two TRPs (even though the example shows two TRPs, it should be understood that this embodiment can be generalized for more than two TRPs):

- The wireless device 22 is configured by the network node 16 with two CORESETs with each CORESET associated with a different TRP. As shown in FIG. 21, CORESET 1 is associated with TRP A, and CORESET 2 is associated with TRP B.
- DL RSs A and B are transmitted from TRPs A and B, respectively. These downlink RSs can be either CSI-RS or SSB.
- The network node 16 uses MAC CE to activate a TCI state for CORESET 1 which has DL RS A as QCL source RS for PDCCH DMRS transmitted using CORESET 1. Similarly, another MAC CE is used by the network node 16 to activate a TCI state for CORESET 2 which has DL RS B as QCL source RS for PDCCH DMRS transmitted using CORESET 2.
- A spatial relation that has DL RS A as the source RS is activated via MAC CE for a first portion of the PUCCH resources in a PUCCH resource set. A second spatial relation that has DL RS B as the source RS is activated via MAC CE for a second portion of PUCCH resources in the PUCCH resource set.

In one or more embodiments, the ACK/NACK (A/N) for a PDSCH scheduled by a PDCCH detected in a CORESET is reported in a PUCCH resource if the following condition is met:

- 'if the source RS in the activated spatial relation of the PUCCH resource is the same as the QCL source RS in the activated TCI state of the CORESET.'

Hence, all the PUCCH resources configured (e.g., by network node 16) to a wireless device 22 that have the same source RS in their activated spatial relation as the QCL source RS of the activated TCI state of the CORESET correspond to an implicit PUCCH resource group associated with that CORESET. And, the ACK/NACK for a PDSCH scheduled by a PDCCH detected in a CORESET is reported in a PUCCH resource belonging to the PUCCH resource group associated with that CORESET.
In the example of FIG. 21, the eight PUCCH resources having DL RS A as the spatial relation source RS form an implicit PUCCH resource group associated with CORESET 1. Similarly, the eight PUCCH resources in the PUCCH resources having DL RS B as the spatial relation source RS form an implicit PUCCH resource group associated with CORESET 2.

In one or more embodiments, HARQ A/Ns for PDCCHs detected in a CORESET with a value(s) of PDSCH-to-HARQ_feedback timing indicator indicating a same slot for the PUCCH transmission are reported in one of the PUCCH resources in the implicit PUCCH group associated with that CORESET.

One advantage with Example 5 is that the PUCCH resources can be better utilized. For instance, in a case where there are unused PUCCH resources associated with a first CORESET, these PUCCH resources can be associated with a second CORESET via changing the spatial relation of these PUCCH resource such that their spatial relation source RS is the same as the active QCL source RS of the second CORESET. Hence, this embodiment can offer better utilization of PUCCH resources compared to a scheme where the dedicated PUCCH resources are RRC configured (e.g., by network node 16) to be used with one TRP.

In an alternate version of one or more embodiments, the ACK/NACK for a PDSCH scheduled by a PDCCH detected in a CORESET is reported in a PUCCH resource if the following condition is met:

- 'if the pucch-PathlossReferenceRS in the activated spatial relation of the PUCCH resource is the same as the QCL source RS in the activated TCI state of the CORESET.'

Hence, the pucch-PathlossReferenceRS can be used instead of spatial relation source RS in order to define the implicit PUCCH resource group associated with a CORESET.

In this embodiment, the implicit PUCCH resource group is a subset of the PUCCH resources in a PUCCH resource set.

Note that the PUCCH resource from within the implicit PUCCH resource group to report the ACK/NACK is indicated by the 3-bit PRI field. If the number of PUCCH resources within an implicit PUCCH resource group $R'_{PUCCH}$ is larger than 8, then the PUCCH resource is determined using as similar formula in the background section where $R_{PUCCH}$ is replaced by $R'_{PUCCH}$.

Note that the term "implicit PUCCH resource group" may not be specified in standards, but the term is used here to define the functionality. Similar functionality as described here as part of the disclosure can be defined in 3GPP specifications without introducing 'implicit PUCCH resource group' terminology.

Some Instances:

Instance 1. Implicitly linking "CORESET groups" to one or more TRPs, either explicitly associate each CORESET with a CORESET group ID or implicitly associate a CORESET to a CORESET group through TCI state configured to the CORESET or source reference signal(s) configured for the TCI state, where HARQ A/Ns associated with PDCCHs detected in each CORESET group and to be sent in the same slot are jointly encoded and sent in a separate PUCCH resource

Instance 2. PUCCH resource partition between "CORESET groups":

a. PUCCH resources are shared by multiple CORESET groups, when a collision occurs due to the same PRI value being used and the same PUCCH resource set is determined, a rule is used to send A/N associated with one CORESET group to a different PUCCH resource

b. PUCCH resources for different CORESET groups are partitioned based on the PRI value range such that different PRI value ranges are allocated to different CORESET groups. Such partition is transparent to the wireless device 22.

c. PUCCH resources for different CORESET groups are partitioned implicitly based on TCI states of CORESETs and the spatial relation associated wtih the PUCCH resources, where PUCCH resources having the same spatial relation source RS as the QCL reference source RS of a CORESET are associated to PDCCHs transmitted from the CORESET.

Instance 3. In case of joint encoding of HARQ A/K sent in a single PUCCH resource, TB identification can be performed either based on the CORESET over which a PDCCH is received or explicitly indicated in DCI.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

**Claims**

1. A method performed by a wireless device (22), WD, configured to communicate with one or more network nodes (16), the method comprising:

   receiving (S142), from the one or more network nodes (16):

      a physical downlink control channel, PDCCH, configuration of a first group of one or more first control resource sets, CORESETs, having a first group index and a second group of one or more second CORESETs having a second group index; and
      a physical uplink control channel, PUCCH, configuration of a plurality number of PUCCH resource sets, each PUCCH resource set including a plurality number of PUCCH resources;

   monitoring (S144) a first PDCCH over a first CORESET in the first group of one or more first CORESETs and a second PDCCH over a second CORESET different from the first CORESET and belonging to the second group of one or more second CORESETs;
   receiving (S146) a first physical downlink shared channel, PDSCH, scheduled by the first PDCCH and a second PDSCH scheduled by the second PDCCH; and

transmitting (S148), to the one or more network nodes (16), a first Hybrid Automatic Repeat reQuest, HARQ, acknowledgement/non-acknowledgement, A/N, associated with the first PDSCH on a first PUCCH resource and a second HARQ A/N associated with the second PDSCH on a second PUCCH resource.,

wherein the first PUCCH resource is the same as the second PUCCH resource when the first group index is the same as the second group index;

wherein the first PUCCH resource is different from the second PUCCH resource when the first group index is different from the second group index, and

wherein the first group index is included in each of the one or more first CORESETs and the second group index is included in each of the one or more second CORESETs.

2. The method of Claim 1, wherein the first group index is different from the second group index.

3. The method of Claim 2, wherein the first group of one or more CORESETs is associated with at least one first Transmission Configuration Indicator, TCI, state and the second group of one or more CORESETs is associated with at least one second TCI state, the at least one first TCI state being different from the at least one second TCI state.

4. The method of Claim 2 or 3, wherein the first PUCCH resource is indicated by a first PUCCH resource indicator, PRI, included in the first PDCCH and the second PUCCH resource is indicated by a second PRI included in the second PDCCH.

5. The method of Claim 4, wherein the first PRI is different from the second PRI.

6. The method of Claim 1, wherein the first group index equals to the second group index.

7. A method performed by a network node (16) configured to communicate with a wireless device (22), WD, the method comprising:

transmitting:

a physical downlink control channel, PDCCH, configuration of a first group of one or more first control resource sets, CORESETs, having a first group index and a second group of one or more second CORESETs having a second group index; and

a physical uplink control channel, PUCCH, configuration of a plurality number of PUCCH resource sets, each PUCCH resource set including a plurality number of PUCCH resources;

transmitting a first PDCCH over a first CORESET in the first group of one or more first CORESETs and a second PDCCH over a second CORESET different from the first CORESET belonging to the second group of one or more second CORESETs;

transmitting a first physical downlink shared channel, PDSCH, scheduled by the first PDCCH and a second PDSCH scheduled by the second PDCCH; and

receiving a first Hybrid Automatic Repeat reQuest, HARQ, acknowledgement/non-acknowledgement, A/N, associated with the first PDSCH on a first PUCCH resource and a second HARQ A/N associated with the second PDSCH on a second PUCCH resource,

wherein the first PUCCH resource is the same as the second PUCCH resource when the first group index is the same as the second group index;

wherein the first PUCCH resource is different from the second PUCCH resource when the first group index is different from the second group index, and

wherein the first group index is included in each of the one or more first CORESETs and the second group index is included in each of the one or more second CORESETs.

8. The method of Claim 7, wherein the first group index is different from the second group index.

9. The method of Claim 8, wherein the first group of one or more CORESETs is associated with at least one first Transmission Configuration Indicator, TCI, state and the second group of one or more CORESETs is associated with at least one second TCI state, the at least one first TCI state being different from the at least one second TCI state.

10. The method of Claim 9, wherein the first PUCCH resource is indicated by a first PUCCH resource indicator, PRI, included in the first PDCCH and the second PUCCH resource is indicated by a second PRI included in the second PDCCH.

11. A computer-readable medium (88, 72) comprising code portions which

- when executed on a processor (86) of a wireless device (22), configure the processor to perform the method according to any one of claims 1 to 6; or
- when executed on a processor (70) of a network node (16), configure the processor to perform the method according to any one of claims 7 to 10.

12. A wireless device (22), WD, configured to communicate with one or more network nodes (16), the wireless device (22) comprising processing circuitry (84), the processing circuitry (84) is configured to cause the wireless device (22) to:

receive, from the one or more network nodes (16):

a physical downlink control channel, PDCCH, configuration of a first group of one or more first control resource sets, CORESETs, having a first group index and a second group of one or more second CORESETs having a second group index; and
a physical uplink control channel, PUCCH, configuration of a plurality number of PUCCH resource sets, each PUCCH resource set including a plurality number of PUCCH resources;

monitor a first PDCCH over a first CORESET in the first group of one or more first CORESETs and a second PDCCH over a second CORESET different from the first CORESET and belonging to the second group of one or more second CORESETs;
receive a first physical downlink shared channel, PDSCH, scheduled by the first PDCCH and a second PDSCH scheduled by the second PDCCH; and
transmit, to the one or more network nodes (16), a first Hybrid Automatic Repeat reQuest, HARQ, acknowledgement/non-acknowledgement, A/N, associated with the first PDSCH on a first PUCCH resource and a second HARQ A/N associated with the second PDSCH on a second PUCCH resource,
wherein the first PUCCH resource is the same as the second PUCCH resource when the first group index is the same as the second group index;
wherein the first PUCCH resource is different from the second PUCCH resource when the first group index is different from the second group index, and
wherein the first group index is included in each of the one or more first CORESETs and the second group index is included in each of the one or more second CORESETs.

13. The wireless device (22) of Claim 12, wherein the processing circuitry (84) is further configured to cause the wireless device (22) to perform the method according to any one of claims 2 to 6.

14. A network node (16) configured to communicate with a wireless device (22), WD, the network node (16) comprising processing circuitry (68), the processing circuitry (68) is configured to cause the network node (16) to:

transmit:

a physical downlink control channel, PDCCH, configuration of a first group of one or more first control resource sets, CORESETs, having a first group index and a second group of one or more second CORESETs having a second group index; and
a physical uplink control channel, PUCCH, configuration of a plurality number of PUCCH resource sets, each PUCCH resource set including a plurality number of PUCCH resources;

transmit a first PDCCH over a first CORESET in the first group of one or more first CORESETs and a second PDCCH over a second CORESET different from the first CORESET and belonging to the second group of one or more second CORESETs;
transmit a first physical downlink shared channel, PDSCH, scheduled by the first PDCCH and a second PDSCH scheduled by the second PDCCH; and
receive a first Hybrid Automatic Repeat reQuest, HARQ, acknowledgement/non-acknowledgement, A/N, associated with the first PDSCH on a first PUCCH resource and a second HARQ A/N associated with the second PDSCH on a second PUCCH resource,

wherein the first PUCCH resource is the same as the second PUCCH resource when the first group index is the same as the second group index;

wherein the first PUCCH resource is different from the second PUCCH resource when the first group index is different from the second group index, and

wherein the first group index is included in each of the one or more first CORESETs and the second group index is included in each of the one or more second CORESETs.

15. The network node (16) of Claim 14, wherein the processing circuitry (68) is further configured to cause the network node (16) to perform the method according to any one of claims 8 to 10.

**Patentansprüche**

1. Verfahren, das von einer drahtlosen Vorrichtung (22), WD, durchgeführt wird, die konfiguriert ist, um mit einem oder mehreren Netzwerkknoten (16) zu kommunizieren, wobei das Verfahren umfasst:

   Empfangen (S142), von dem einen oder den mehreren Netzwerkknoten (16):

   einer physikalischen Downlink-Steuerkanal-, PDCCH-, Konfiguration einer ersten Gruppe eines oder mehrerer erster Steuerressourcensätze, CORESETs, mit einem ersten Gruppenindex und einer zweiten Gruppe eines oder mehrerer zweiter CORESETs mit einem zweiten Gruppenindex; und
   einer physikalischen Uplink-Steuerkanal-, PUCCH-, Konfiguration einer Vielzahl von PUCCH-Ressourcensätzen, wobei jeder PUCCH-Ressourcensatz eine Vielzahl von PUCCH-Ressourcen umfasst;

   Überwachen (S144) eines ersten PDCCH über einen ersten CORESET in der ersten Gruppe eines oder mehrerer erster CORESETs und eines zweiten PDCCH über einen zweiten CORESET, der sich von dem ersten CORESET unterscheidet und zu der zweiten Gruppe eines oder mehrerer zweiter CORESETs gehört;
   Empfangen (S146) eines ersten gemeinsam genutzten physikalischen Downlink-Kanals, PDSCH, der durch den ersten PDCCH geplant wird, und eines zweiten PDSCH, der durch den zweiten PDCCH geplant wird; und
   Übertragen (S148), an den einen oder die mehreren Netzwerkknoten (16), einer ersten hybriden automatischen Wiederholungsanforderungs-, HARQ-, Zurkenntnisnahme/Nichtzurkenntnisnahme, A/N, die mit dem ersten PDSCH auf einer ersten PUCCH-Ressource assoziiert ist, und einer zweiten HARQ A/N, die mit dem zweiten PDSCH auf einer zweiten PUCCH-Ressource assoziiert ist,
   wobei die erste PUCCH-Ressource die gleiche ist wie die zweite PUCCH-Ressource, wenn der erste Gruppenindex der gleiche ist wie der zweite Gruppenindex;
   wobei sich die erste PUCCH-Ressource von der zweiten PUCCH-Ressource unterscheidet, wenn der erste Gruppenindex von dem zweiten Gruppenindex verschieden ist, und
   wobei der erste Gruppenindex in jedem des einen oder der mehreren ersten CORESETs umfasst ist und der zweite Gruppenindex in jedem des einen oder der mehreren zweiten CORESETs umfasst ist.

2. Verfahren nach Anspruch 1, wobei der erste Gruppenindex von dem zweiten Gruppenindex verschieden ist.

3. Verfahren nach Anspruch 2, wobei die erste Gruppe eines oder mehrerer CORESETs mit zumindest einem ersten Übertragungskonfigurationsindikator-, TCI-, Zustand assoziiert ist und die zweite Gruppe eines oder mehrerer CORESETs mit zumindest einem zweiten TCI-Zustand assoziiert ist, wobei der zumindest eine erste TCI-Zustand von dem zumindest einen zweiten TCI-Zustand verschieden ist.

4. Verfahren nach Anspruch 2 oder 3, wobei die erste PUCCH-Ressource durch einen ersten PUCCH-Ressourcenindikator, PRI, der in dem ersten PDCCH umfasst ist, angegeben wird und die zweite PUCCH-Ressource durch einen zweiten PRI, der in dem zweiten PDCCH umfasst ist, angegeben wird.

5. Verfahren nach Anspruch 4, wobei der erste PRI von dem zweiten PRI verschieden ist.

6. Verfahren nach Anspruch 1, wobei der erste Gruppenindex gleich dem zweiten Gruppenindex ist.

7. Verfahren, das von einem Netzwerkknoten (16) ausgeführt wird, der konfiguriert ist, um mit einer drahtlosen Vorrichtung (22), WD, zu kommunizieren, wobei das Verfahren umfasst:

Übertragen:

einer physikalischen Downlink-Steuerkanal-, PDCCH-, Konfiguration einer ersten Gruppe eines oder mehrerer erster Steuerressourcensätze, CORESETs, mit einem ersten Gruppenindex und einer zweiten Gruppe eines oder mehrerer zweiter CORESETs mit einem zweiten Gruppenindex; und
einer physikalischen Uplink-Steuerkanal-, PUCCH-, Konfiguration einer Vielzahl von PUCCH-Ressourcensätzen, wobei jeder PUCCH-Ressourcensatz eine Vielzahl von PUCCH-Ressourcen umfasst;

Übertragen eines ersten PDCCH über einen ersten CORESET in der ersten Gruppe eines oder mehrerer erster CORESETs und eines zweiten PDCCH über einen zweiten CORESET, der sich von dem ersten CORESET unterscheidet und zu der zweiten Gruppe eines oder mehrerer zweiter CORESETs gehört;
Übertragen eines ersten gemeinsam genutzten physikalischen Downlink-Kanals, PDSCH, der durch den ersten PDCCH geplant wird, und eines zweiten PDSCH, der durch den zweiten PDCCH geplant wird; und
Empfangen einer ersten hybriden automatischen Wiederholungsanforderungs-, HARQ-, Zurkenntnisnahme/-Nichtzurkenntnisnahme, A/N, die mit dem ersten PDSCH auf einer ersten PUCCH-Ressource assoziiert ist, und einer zweiten HARQ A/N, die mit dem zweiten PDSCH auf einer zweiten PUCCH-Ressource assoziiert ist, wobei die erste PUCCH-Ressource die gleiche ist wie die zweite PUCCH-Ressource, wenn der erste Gruppenindex der gleiche ist wie der zweite Gruppenindex;
wobei sich die erste PUCCH-Ressource von der zweiten PUCCH-Ressource unterscheidet, wenn der erste Gruppenindex von dem zweiten Gruppenindex verschieden ist, und
wobei der erste Gruppenindex in jedem des einen oder der mehreren ersten CORESETs umfasst ist und der zweite Gruppenindex in jedem des einen oder der mehreren zweiten CORESETs umfasst ist.

8. Verfahren nach Anspruch 7, wobei der erste Gruppenindex von dem zweiten Gruppenindex verschieden ist.

9. Verfahren nach Anspruch 8, wobei die erste Gruppe eines oder mehrerer CORESETs mit zumindest einem ersten Übertragungskonfigurationsindikator-, TCI-, Zustand assoziiert ist und die zweite Gruppe eines oder mehrerer CORESETs mit zumindest einem zweiten TCI-Zustand assoziiert ist, wobei der zumindest eine erste TCI-Zustand von dem zumindest einen zweiten TCI-Zustand verschieden ist.

10. Verfahren nach Anspruch 9, wobei die erste PUCCH-Ressource durch einen ersten PUCCH-Ressourcenindikator, PRI, der in dem ersten PDCCH umfasst ist, angegeben wird und die zweite PUCCH-Ressource durch einen zweiten PRI, der in dem zweiten PDCCH umfasst ist, angegeben wird.

11. Computerlesbares Medium (88, 72), das Codeabschnitte umfasst, die

- bei Ausführung auf einem Prozessor (86) einer drahtlosen Vorrichtung (22) den Prozessor konfigurieren, um das Verfahren nach einem der Ansprüche 1 bis 6 durchzuführen; oder
- bei Ausführung auf einem Prozessor (70) eines Netzwerkknotens (16) den Prozessor konfigurieren, um das Verfahren nach einem der Ansprüche 7 bis 10 durchzuführen.

12. Drahtlose Vorrichtung (22), WD, die konfiguriert ist, um mit einem oder mehreren Netzwerkknoten (16) zu kommunizieren, wobei die drahtlose Vorrichtung (22) eine Verarbeitungsschaltung (84) umfasst, wobei die Verarbeitungsschaltung (84) konfiguriert ist, um die drahtlose Vorrichtung (22) zu veranlassen, um:

von dem einen oder den mehreren Netzwerkknoten (16) zu empfangen:

eine physikalische Downlink-Steuerkanal-, PDCCH-, Konfiguration einer ersten Gruppe eines oder mehrerer erster Steuerressourcensätze, CORESETs, mit einem ersten Gruppenindex und einer zweiten Gruppe eines oder mehrerer zweiter CORESETs mit einem zweiten Gruppenindex; und
eine physikalische Uplink-Steuerkanal-, PUCCH-, Konfiguration einer Vielzahl von PUCCH-Ressourcensätzen, wobei jeder PUCCH-Ressourcensatz eine Vielzahl von PUCCH-Ressourcen umfasst;

einen ersten PDCCH über einen ersten CORESET in der ersten Gruppe eines oder mehrerer erster CORESETs und einen zweiten PDCCH über einen zweiten CORESET zu überwachen, der sich vom ersten CORESET unterscheidet und zur zweiten Gruppe eines oder mehrerer zweiter CORESETs gehört;
einen ersten gemeinsam genutzten physikalischen Downlink-Kanal, PDSCH, der durch den ersten PDCCH geplant wird, und einen zweiten PDSCH, der durch den zweiten PDCCH geplant wird, zu empfangen; und

an den einen oder die mehreren Netzknoten (16) eine erste hybride automatische Wiederholungsanforderungs-, HARQ-, Zurkenntnisnahme/ Nichtzurkenntnisnahme, A/N, die mit dem ersten PDSCH auf einer ersten PUCCH-Ressource assoziiert ist, und eine zweite HARQ A/N, die mit dem zweiten PDSCH auf einer zweiten PUCCH-Ressource assoziiert ist, zu übertragen,

wobei die erste PUCCH-Ressource die gleiche ist wie die zweite PUCCH-Ressource, wenn der erste Gruppenindex der gleiche ist wie der zweite Gruppenindex;

wobei sich die erste PUCCH-Ressource von der zweiten PUCCH-Ressource unterscheidet, wenn der erste Gruppenindex von dem zweiten Gruppenindex verschieden ist, und

wobei der erste Gruppenindex in jedem des einen oder der mehreren ersten CORESETs umfasst ist und der zweite Gruppenindex in jedem des einen oder der mehreren zweiten CORESETs umfasst ist.

13. Drahtlose Vorrichtung (22) nach Anspruch 12, wobei die Verarbeitungsschaltung (84) ferner konfiguriert ist, um die drahtlose Vorrichtung (22) zu veranlassen, das Verfahren nach einem der Ansprüche 2 bis 6 durchzuführen.

14. Netzwerkknoten (16), der konfiguriert ist, um mit einer drahtlosen Vorrichtung (22), WD, zu kommunizieren, wobei der Netzwerkknoten (16) eine Verarbeitungsschaltung (68) umfasst, wobei die Verarbeitungsschaltung (68) konfiguriert ist, um den Netzwerkknoten (16) zu veranlassen, um zu:

übertragen:

eine physikalische Downlink-Steuerkanal-, PDCCH-, Konfiguration einer ersten Gruppe eines oder mehrerer erster Steuerressourcensätze, CORESETs, mit einem ersten Gruppenindex und einer zweiten Gruppe eines oder mehrerer zweiter CORESETs mit einem zweiten Gruppenindex; und

eine physikalische Uplink-Steuerkanal-, PUCCH-, Konfiguration einer Vielzahl von PUCCH-Ressourcensätzen, wobei jeder PUCCH-Ressourcensatz eine Vielzahl von PUCCH-Ressourcen umfasst;

einen ersten PDCCH über einen ersten CORESET in der ersten Gruppe eines oder mehrerer erster CORESETs und einen zweiten PDCCH über einen zweiten CORESET, der sich von dem ersten CORESET unterscheidet und zu der zweiten Gruppe eines oder mehrerer zweiter CORESETs gehört, zu übertragen;

einen ersten gemeinsam genutzten physikalischen Downlink-Kanal, PDSCH, der durch den ersten PDCCH geplant wird, und einen zweiten PDSCH, der durch den zweiten PDCCH geplant wird, zu übertragen; und

eine erste hybride automatische Wiederholungsanforderungs-, HARQ-, Zurkenntnisnahme/Nichtzurkenntnisnahme, A/N, die mit dem ersten PDSCH auf einer ersten PUCCH-Ressource assoziiert ist, und eine zweite HARQ A/N, die mit dem zweiten PDSCH auf einer zweiten PUCCH-Ressource assoziiert ist, zu empfangen,

wobei die erste PUCCH-Ressource die gleiche ist wie die zweite PUCCH-Ressource, wenn der erste Gruppenindex der gleiche ist wie der zweite Gruppenindex;

wobei sich die erste PUCCH-Ressource von der zweiten PUCCH-Ressource unterscheidet, wenn der erste Gruppenindex von dem zweiten Gruppenindex verschieden ist, und

wobei der erste Gruppenindex in jedem des einen oder der mehreren ersten CORESETs umfasst ist und der zweite Gruppenindex in jedem des einen oder der mehreren zweiten CORESETs umfasst ist.

15. Netzwerkknoten (16) nach Anspruch 14, wobei die Verarbeitungsschaltung (68) ferner konfiguriert ist, um den Netzwerkknoten (16) zu veranlassen, das Verfahren nach einem der Ansprüche 8 bis 10 durchzuführen.

**Revendications**

1. Procédé mis en œuvre par un dispositif sans fil (22), WD, conçu pour communiquer avec un ou plusieurs nœuds de réseau (16), le procédé comprenant :

la réception (S142), en provenance desdits un ou plusieurs nœuds de réseau (16) :

d'une configuration de canal physique de commande de liaison descendante, PDCCH, d'un premier groupe d'un ou plusieurs premiers ensembles de ressources de commande, CORESET, ayant un premier indice de groupe et d'un second groupe d'un ou plusieurs seconds CORESET ayant un second indice de groupe ; et

d'une configuration de canal physique de commande de liaison montante, PUCCH, d'une pluralité d'ensembles de ressources de PUCCH, chaque ensemble de ressources de PUCCH comprenant une pluralité de ressources de PUCCH ;

la surveillance (S144) d'un premier PDCCH sur un premier CORESET dans le premier groupe d'un ou plusieurs premiers CORESET et d'un second PDCCH sur un second CORESET différent du premier CORESET et appartenant au second groupe d'un ou plusieurs seconds CORESET ;

la réception (S146) d'un premier canal physique partagé de liaison descendante, PDSCH, planifié par le premier PDCCH et d'un second PDSCH planifié par le second PDCCH ; et

la transmission (S148), auxdits un ou plusieurs nœuds de réseau (16), d'un premier accusé de réception/non-accusé de réception, A/N, de demande de répétition automatique hybride, HARQ, associé au premier PDSCH sur une première ressource de PUCCH et d'un second A/N d'HARQ associé au second PDSCH sur une seconde ressource de PUCCH.

dans lequel la première ressource de PUCCH est identique à la seconde ressource de PUCCH lorsque le premier indice de groupe est identique au second indice de groupe ;

dans lequel la première ressource de PUCCH est différente de la seconde ressource de PUCCH lorsque le premier indice de groupe est différent du second indice de groupe, et

dans lequel le premier indice de groupe est inclus dans chacun desdits un ou plusieurs premiers CORESET et le second indice de groupe est inclus dans chacun desdits un ou plusieurs seconds CORESET.

2. Procédé selon la revendication 1, dans lequel le premier indice de groupe est différent du second indice de groupe.

3. Procédé selon la revendication 2, dans lequel le premier groupe d'un ou plusieurs CORESET est associé à au moins un premier état d'indicateur de configuration de transmission, TCI, et le second groupe d'un ou plusieurs CORESET est associé à au moins un second état de TCI, ledit au moins un premier état de TCI étant différents dudit au moins un second état de TCI.

4. Procédé selon la revendication 2 ou 3, dans lequel la première ressource de PUCCH est indiquée par un premier indicateur de ressource de PUCCH, PRI, inclus dans le premier PDCCH et la seconde ressource de PUCCH est indiquée par un second PRI inclus dans le second PDCCH.

5. Procédé selon la revendication 4, dans lequel le premier PRI est différent du second PRI.

6. Procédé selon la revendication 1, dans lequel le premier indice de groupe est égal au second indice de groupe.

7. Procédé mis en œuvre par un nœud de réseau (16) conçu pour communiquer avec un dispositif sans fil (22), WD, le procédé comprenant :

la transmission :

d'une configuration de canal physique de commande de liaison descendante, PDCCH, d'un premier groupe d'un ou plusieurs premiers ensembles de ressources de commande, CORESET, ayant un premier indice de groupe, et d'un second groupe d'un ou plusieurs seconds CORESET ayant un second indice de groupe ; et
d'une configuration de canal physique de commande de liaison montante, PUCCH, d'une pluralité d'ensembles de ressources de PUCCH, chaque ensemble de ressources de PUCCH incluant une pluralité de ressources de PUCCH ;

la transmission d'un premier PDCCH sur un premier CORESET dans le premier groupe d'un ou plusieurs premiers CORESET et d'un second PDCCH sur un second CORESET différent du premier CORESET appartenant au second groupe d'un ou plusieurs seconds CORESET ;

la transmission d'un premier canal physique partagé de liaison descendante, PDSCH, planifié par le premier PDCCH et d'un second PDSCH planifié par le second PDCCH ; et

la réception d'un premier accusé de réception/non-accusé de réception, A/N, de demande de répétition automatique hybride, HARQ, associé au premier PDSCH sur une première ressource de PUCCH et d'un second A/N HARQ associé au second PDSCH sur une seconde ressource de PUCCH.

dans lequel la première ressource de PUCCH est identique à la seconde ressource de PUCCH lorsque le premier indice de groupe est identique au second indice de groupe ;

dans lequel la première ressource de PUCCH est différente de la seconde ressource de PUCCH lorsque le premier indice de groupe est différent du second indice de groupe ; et

dans lequel le premier indice de groupe est inclus dans chacun desdits un ou plusieurs premiers CORESET et le second indice de groupe est inclus dans chacun desdits un ou plusieurs seconds CORESET.

**8.** Procédé selon la revendication 7, dans lequel le premier indice de groupe est différent du second indice de groupe.

**9.** Procédé selon la revendication 8, dans lequel le premier groupe d'un ou plusieurs CORESET est associé à au moins un premier état d'indicateur de configuration de transmission, TCI, et le second groupe d'un ou plusieurs CORESET est associé à au moins un second état de TCI, ledit au moins un premier état de TCI étant différents dudit au moins un second état de TCI.

**10.** Procédé selon la revendication 9, dans lequel la première ressource de PUCCH est indiquée par un premier indicateur de ressource de PUCCH, PRI, inclus dans le premier PDCCH et la seconde ressource de PUCCH est indiquée par un second PRI inclus dans le second PDCCH.

**11.** Support lisible par ordinateur (88, 72) comprenant des parties de code qui

- lorsqu'elles sont exécutées sur un processeur (86) d'un dispositif sans fil (22), configurent le processeur pour mettre en œuvre le procédé selon l'une quelconque des revendications 1 à 6 ; ou
- lorsqu'elles sont exécutées sur un processeur (70) d'un nœud de réseau (16), configurent le processeur pour mettre en œuvre le procédé selon l'une quelconque des revendications 7 à 10.

**12.** Dispositif sans fil (22), WD, conçu pour communiquer avec un ou plusieurs nœuds de réseau (16), le dispositif sans fil (22) comprenant des circuits de traitement (84), les circuits de traitement (84) étant conçus pour amener le dispositif sans fil (22) :

à recevoir, en provenance desdits un ou plusieurs nœuds de réseau (16) :

une configuration de canal physique de commande de liaison descendante, PDCCH, d'un premier groupe d'un ou plusieurs premiers ensembles de ressources de commande, CORESET, ayant un premier indice de groupe, et d'un second groupe d'un ou plusieurs seconds CORESET ayant un second indice de groupe ; et
une configuration de canal physique de commande de liaison montante, PUCCH, d'une pluralité d'ensembles de ressources de PUCCH, chaque ensemble de ressources de PUCCH comprenant une pluralité de ressources de PUCCH ;

à surveiller un premier PDCCH sur un premier CORESET dans le premier groupe d'un ou plusieurs premiers CORESET et un second PDCCH sur un second CORESET différent du premier CORESET et appartenant au second groupe d'un ou plusieurs seconds CORESET ;
à recevoir un premier canal physique partagé de liaison descendante, PDSCH, planifié par le premier PDCCH et un second PDSCH planifié par le second PDCCH ; et
à transmettre, auxdits un ou plusieurs nœuds de réseau (16), un premier accusé de réception/non-accusé de réception, A/N, de demande de répétition automatique hybride, HARQ, associé au premier PDSCH sur une première ressource de PUCCH et un second A/N d'HARQ associé au second PDSCH sur une seconde ressource de PUCCH,
dans lequel la première ressource de PUCCH est identique à la seconde ressource de PUCCH lorsque le premier indice de groupe est identique au second indice de groupe ;
dans lequel la première ressource de PUCCH est différente de la seconde ressource de PUCCH lorsque le premier indice de groupe est différent du second indice de groupe, et
dans lequel le premier indice de groupe est inclus dans chacun desdits un ou plusieurs premiers CORESET et le second indice de groupe est inclus dans chacun desdits un ou plusieurs seconds CORESET.

**13.** Dispositif sans fil (22) selon la revendication 12, dans lequel les circuits de traitement (84) sont en outre conçus pour amener le dispositif sans fil (22) à mettre en œuvre le procédé selon l'une quelconque des revendications 2 à 6.

**14.** Nœud de réseau (16) conçu pour communiquer avec un dispositif sans fil (22), WD, le nœud de réseau (16) comprenant des circuits de traitement (68), les circuits de traitement (68) étant conçus pour amener le nœud de réseau (16) :

à transmettre :

une configuration de canal physique de commande de liaison descendante, PDCCH, d'un premier groupe d'un ou plusieurs premiers ensembles de ressources de commande, CORESET, ayant un premier indice de groupe, et d'un second groupe d'un ou plusieurs seconds CORESET ayant un second indice de groupe ; et une configuration de canal physique de commande de liaison montante, PUCCH, d'une pluralité d'ensembles de ressources de PUCCH, chaque ensemble de ressources de PUCCH comprenant une pluralité de ressources de PUCCH ;

à transmettre un premier PDCCH sur un premier CORESET dans le premier groupe d'un ou plusieurs premiers CORESET et un second PDCCH sur un second CORESET différent du premier CORESET et appartenant au second groupe d'un ou plusieurs seconds CORESET ;

à transmettre un premier canal physique partagé de liaison descendante, PDSCH, planifié par le premier PDCCH, et un second PDSCH planifié par le second PDCCH ; et

à recevoir un premier accusé de réception/non-accusé de réception, A/N, de demande de répétition automatique hybride, HARQ, associé au premier PDSCH sur une première ressource de PUCCH et un second A/N d'HARQ associé au second PDSCH sur une seconde ressource de PUCCH,

dans lequel la première ressource de PUCCH est identique à la seconde ressource de PUCCH lorsque le premier indice de groupe est identique au second indice de groupe ;

dans lequel la première ressource de PUCCH est différente de la seconde ressource de PUCCH lorsque le premier indice de groupe est différent du second indice de groupe, et

dans lequel le premier indice de groupe est inclus dans chacun desdits un ou plusieurs premiers CORESET et le second indice de groupe est inclus dans chacun desdits un ou plusieurs seconds CORESET.

15. Nœud de réseau (16) selon la revendication 14, dans lequel les circuits de traitement (68) sont en outre conçus pour amener le nœud de réseau (16) à mettre en œuvre le procédé selon l'une quelconque des revendications 8 à 10.

One slot (14 symbols)

PDCH (data)   Control (PDCCH), possibly data

## FIG. 1

Resource
Element

Resource block

OFDM symbol #

0 1 2 3 4 5 6 7 8 9 10 11 12 13

Subcarriers

a 14-symbol slot

one slot

system bandwidth

Frequency

Time

## FIG. 2

EP 3 925 124 B1

$N_T$ Antenna Ports

Precoding

Symbol Vector s

IFFT

IFFT

IFFT

$\mathbf{W}_{N_T \times r}$

Layer 1

Layer 2

Layer $r$

FIG. 3

EP 3 925 124 B1

Codeword 1

v layers

$N_T$ antenna ports

TB1 — Scrambling — Modulation mapping

Layer mapping — Precoding (W)

RE mapping — OFDM signal generation

RE mapping — OFDM signal generation

Codeword 2

TB2 — Scrambling — Modulation mapping

RE mapping — OFDM signal generation

## FIG. 4

TRP A — *DL RS* → WD

*Rx spatial filtering configuration used to receive DL RS*

TRP A

*PUCCH* ← WD

*Tx spatial filtering configuration used to transmit PUCCH*

(a)

(b)

## FIG. 5

| R | Serving Cell ID | | | | | BWP ID | | Oct 1 |
|---|---|---|---|---|---|---|---|---|
| R | PUCCH Resource ID | | | | | | | Oct 2 |
| $S_7$ | $S_6$ | $S_5$ | $S_4$ | $S_3$ | $S_2$ | $S_1$ | $S_0$ | Oct 3 |

## FIG. 6

## FIG. 7

FIG. 8

FIG. 9

FIG. 10

BEGIN

**S100**
Host computer
provides user
data

↔

**S102**
Host computer
executes host
application

**S104**
Host computer
initiates
transmission
carrying the
user data to
the WD

**S106**
Network Node
transmits the
user data

**S108**
WD executes
client
application

END

# FIG. 11

BEGIN

**S110**
Host computer
provides user
data

**S112**
Host computer
initiates
transmission
carrying the
user data to
the WD

**S114**
WD receives
the user data

END

# FIG. 12

BEGIN

**S116**
WD receives input data provided at host computer

**S118**
WD executes client application

**S120**
WD provides user data

**S122**
WD executes client application

**S124**
WD initiates transmission of the user data to the host computer

**S126**
Host computer receives user data transmitted from the WD

END

# FIG. 13

BEGIN

**S128**
Network Node receives user data from WD

**S130**
Network Node initiates transmission of user data to the host computer

**S132**
Host computer receives the user data

END

# FIG. 14

BEGIN

Transmit:
a physical downlink control channel, PDCCH, configuration of a first group of one or more first control resource sets, CORESETs, having a first group index and a second group of one or more second control resource sets, CORESETs, having a second group index; and
a physical uplink control channel, PUCCH, configuration of a plurality number of PUCCH resource sets, each PUCCH resource set including a plurality number of PUCCH resources
S134

Transmit a first PDCCH in the first group of one or more first CORESETs and a second PDCCH in the second group of one or more second CORESETs
S136

Transmit a first physical downlink shared channel, PDSCH, scheduled by the first PDCCH and a second PDSCH scheduled by the second PDCCH
S138

Receive a first Hybrid Automatic Repeat reQuest, HARQ, acknowledgement/non-acknowledgement, A/N, associated with the first PDSCH and a second HARQ A/N associated with the second PDSCH
S140

END

FIG. 15

BEGIN

Receive:
a physical downlink control channel, PDCCH, configuration of a first group of one or more first control resource sets, CORESETs, having a first group index and a second group of one or more second control resource sets, CORESETs, having a second group index; and
a physical uplink control channel, PUCCH, configuration of a plurality number of PUCCH resource sets, each PUCCH resource set including a plurality number of PUCCH resources
S142

Monitor for a first PDCCH in the first group of one or more first CORESETs and a second PDCCH in the second group of one or more second CORESETs
S144

Receive a first physical downlink shared channel, PDSCH, scheduled by the first PDCCH and a second PDSCH scheduled by the second PDCCH
S146

Transmit, to the one or more network nodes, a first Hybrid Automatic Repeat reQuest, HARQ, acknowledgement/non-acknowledgement, A/N, associated with the first PDSCH and a second HARQ A/N associated with the second PDSCH
S148

END

# FIG. 16

FIG. 17

FIG. 18

FIG. 19

EP 3 925 124 B1

FIG. 20

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018228487 A1

- EP 3883136 A1

**Non-patent literature cited in the description**

- UCI enhancements for URLLC. *3GPP draft, R1-1900127*